# EUROPÄISCHE PATENTSCHRIFT

(11) **EP 1 545 928 B1**
(45) Veröffentlichungstag und Bekanntmachung des Hinweises auf die Patenterteilung: **23.04.2008**
(21) Anmeldenummer: 03750369.5
(22) Anmeldetag: 16.09.2003
(51) Int. Cl.: B60N 2/20

(54) **SITZANORDNUNG FÜR EINEN KRAFTFAHRZEUGSITZ**
SEAT ASSEMBLY FOR A MOTOR VEHICLE SEAT
ENSEMBLE SIEGE POUR UN VEHICULE A MOTEUR

(30) Priorität: 27.09.2002 DE 20215321 U; 27.09.2002 DE 10246473; 11.08.2003 DE 10337682
(43) Veröffentlichungstag der Anmeldung: 29.06.2005
(73) Patentinhaber: Brose Fahrzeugteile GmbH & Co. KG, Coburg, 96450 Coburg (DE)
(72) Erfinder: HOFMANN, Jochen, 96257 Marktgraitz (DE); ANGERMÜLLER, Jürgen, 96268 Mitwitz (DE); HAAGEN, Thomas, 96253 Obersiemau (DE); FISCHER, Matthias, 96317 Kronach (DE)
(74) Vertreter: Baumgärtel, Gunnar
(86) Internationale Anmeldenummer: PCT/DE2003/003143
(87) Internationale Veröffentlichungsnummer: WO 2004/030979

(56) Entgegenhaltungen:
- EP-A- 0 404 628
- DE-A- 10 109 822
- FR-A- 2 781 435
- US-A- 4 726 622
- US-A- 5 997 090

## Beschreibung

Die Erfindung betrifft eine Sitzanordnung für einen Kraftfahrzeugsitz nach dem Oberbegriff des Patentanspruchs 1.

Eine solche Sitzanordnung ist z.B. aus DE-A-10109822 bekannt. Eine solche Sitzanordnung umfasst ein Sitzuntergestell, das eine Sitzfläche für einen Kraftfahrzeuginsassen definiert, sowie eine schwenkbar an einer Gestellbaugruppe des Sitzes angelenkte Rückenlehne, die um eine Schwenkachse auf die Sitzfläche klappbar ist.

Eine derartige Sitzanordnung kann sowohl zur Bildung eines Vordersitzes als auch zur Bildung eines Rücksitzes eines Kraftfahrzeuges dienen. Sie ermöglicht das Vorklappen der Rückenlehne des entsprechenden Kraftfahrzeugsitzes auf die Sitzfläche, um zusätzlichen Stauraum zu schaffen. Die entsprechende Sitzfläche wird in der Regel durch ein Sitzpolster gebildet, das auf dem Sitzuntergestell angeordnet ist. Somit definiert das Sitzuntergestell die Sitzfläche insoweit, als es die Lage des Sitzpolsters bestimmt. Gebildet wird die Sitzfläche jedoch nicht durch das Sitzuntergestell selbst sondern vielmehr durch das Sitzpolster.

Bei einer Sitzanordnung der eingangs genannten Art besteht das Problem, dass die Rückenlehne beim Vorklappen, insbesondere über eine an der Rückenlehne vorgesehene Kopfstütze, mit der Windschutzscheibe (im Fall eines Vordersitzes) oder mit der Rückenlehne eines anderen Sitzes (im Fall eines Rücksitzes) kollidieren kann.

Daher ist es erforderlich, vor dem Vorklappen der Rückenlehne auf die Sitzfläche die Kopfstütze von der Rückenlehne abzunehmen und an einem separaten Ort abzulegen. Dies beeinträchtigt in erheblichem Maße den Bedienkomfort einer Sitzanordnung mit vorklappbarer Rückenlehne.

Der Erfindung liegt daher das Problem zugrunde, eine Sitzanordnung der eingangs genannten Art hinsichtlich ihres Bedienkomforts zu verbessern.

Dieses Problem wird erfindungsgemäß durch die Schaffung einer Sitzanordnung mit den Merkmalen des Patentanspruchs 1 gelöst.

Danach wird die Schwenkachse der Rückenlehne beim Vorklappen der Rückenlehne auf die Sitzfläche entlang einer vorgegebenen Bahn bewegt (verschoben), so dass sie ihre räumliche Lage ändert.

Diese Bahn kann derart gewählt werden, dass eine Kollision der Rückenlehne des entsprechenden Fahrzeugsitzes mit anderen Fahrzeugkomponenten vermieden wird, insbesondere indem die Bahn derart gewählt wird, dass die Oberkante der Rückenlehne (und damit auch eine an der Oberkante der Rückenlehne angeordnete Kopfstütze) beim Vorklappen der Rückenlehne entlang einer Kurve bewegt werden, die eine Kollision mit anderen Fahrzeugkomponenten ausschließt.

Die Schwenkachse der Rückenlehne kann hierbei durch eine körperliche Baugruppe gebildet werden, d.h., es handelt sich nicht um eine bloß virtuelle Schwenkachse, sondern vielmehr um eine Lagerachse, über die die Rückenlehne an einer Gestellbaugruppe des Kraftfahrzeugsitzes schwenkbar gelagert ist.

Diese Schwenkachse wird beim Vorklappen der Rückenlehne entlang der vorgegebenen Bahn mittels einer Führungseinrichtung, z.B. in Form einer Führungskulisse, derart zwangsgeführt, dass die gewünschte Bewegung der Oberkante der Rückenlehne erreicht wird.

Alternativ zu einer Führungseinrichtung, die sich entlang der vorgegebenen Bahn für die Bewegung der Schwenkachse erstreckt, kann zur Führung der Schwenkachse auch ein längserstrecktes Führungselement vorgesehen sein, über das die Schwenkachse mit der zugehörigen Gestellbaugruppe verbunden ist und das beim Vorklappen der Rückenlehne derart bewegt wird, dass sich die Schwenkachse auf der vorgegebenen Bahnkurve bewegt. Als derartiges Führungselement eignet sich insbesondere ein Führungshebel, der schwenkbar an der Gestellbaugruppe angelenkt ist.

Um eine definierte Bewegung der Schwenkachse beim Vorklappen der Rückenlehne zu sicherzustellen, kann die Rückenlehne zusätzlich in einem von ihrer Schwenkachse (Lagerachse) beabstandeten Abschnitt mit der Gestellbaugruppe verbunden sein, z.B. über ein Koppelelement in Form eines Koppelhebels, das sich von der Rückenlehne zu der Gestellbaugruppe erstreckt. Alternativ kann die zusätzliche Kopplung von Rückenlehne und Gestellbaugruppe über eine Führungseinrichtung in Form einer Führungskulisse erfolgen, in der ein von der Schwenkachse beabstandeter Abschnitt der Rückenlehne beim Vorklappen geführt wird.

Gemäß einer Variante der Erfindung wird die Schwenkachse beim Vorklappen der Rückenlehne auf einer geschlossenen Bahn bewegt, so dass sich die Schwenkachse nach dem vollständigen Vorklappen der Rückenlehne wieder an derselben Stelle befindet wie vor Beginn der Klappbewegung. Dies kann auch dadurch erreicht werden, dass die Schwenkachse beim Vorklappen der Rückenlehne von einem Ende zum anderen Ende einer offenen Bahnkurve und wieder zurück zum einen Ende dieser Bahnkurve bewegt wird.

Gemäß einer Weiterbildung der Erfindung sind Mittel zur Verriegelung der Schwenkachse in der Position vorgesehen, die einer in Gebrauchsposition hochgeklappten Rückenlehne entspricht, und/oder in der Position, die die Rückenlehne nach dem Vorklappen auf die Sitzfläche einnimmt. Demnach kann die Schwenkachse in beiden Endpositionen der Rückenlehne, also sowohl in der vor dem Vorklappen der Rückenlehne auf die Sitzfläche bestehenden Gebrauchsposition als auch in der nach dem Vorklappen der Rückenlehne auf die Sitzfläche bestehenden Position verriegelt werden. Unter einer in Gebrauchsposition hochgeklappten Rückenlehne wird dabei eine Position der Rückenlehne verstanden, in der diese zum Abstützen des Rückens einer auf dem entsprechenden Fahrzeugsitz sitzenden Person geeignet und nicht zur Schaffung von Transportraum auf die Sitzfläche vorgeklappt ist.

Als Verriegelungsmittel eignet sich beispielsweise ein schwenkbar gelagerter Verriegelungshebel.

Gemäß einer weiteren Ausführungsform der Erfindung ist zusätzlich eine Verstelleinrichtung vorgesehen, mittels der die Neigung der hochgeklappten Rückenlehne zwischen verschiedenen Gebrauchspositionen einstellbar ist. Diese Verstelleinrichtung dient also nicht zum Vorklappen der Rückenlehne auf die Sitzfläche, sondern vielmehr dazu, den Neigungswinkel der hochgeklappten Rückenlehne etwas verändern zu können, um ihn an die individuellen Bedürfnisse eines Fahrzeuginsassen anpassen zu können. Dabei verbleibt die Rückenlehne jedoch stets in einer Position, in der sie zum Abstützen des Rückens einer auf dem entsprechenden Fahrzeugsitz befindlichen Person geeignet ist.

Diese Einstellung der Lehnenneigung kann je nach Auslegung der hierfür vorgesehenen Verstelleinrichtung durch manuelle Einwirkung unmittelbar auf die Rückenlehne selbst oder mittels eines mit der Rückenlehne gekoppelten, ggf. elektrischen, Antriebs erfolgen.

Zur Fixierung einer zuvor eingestellten Neigung der Rückenlehne kann eine Verriegelungseinrichtung vorgesehen sein, die einerseits durch eine selbsthemmende Auslegung der zur Einstellung der Lehnenneigung vorgesehenen Verstelleinrichtung oder einer hiermit zusammenwirkenden Bremse gebildet werden kann oder andererseits durch separate Verriegelungsmittel, insbesondere wenn die Einstellung der Lehnenneigung durch unmittelbare manuelle Einwirkung auf die Rückenlehe erfolgen soll. Derartige separate Verriegelungsmittel können ein primäres Verriegelungselement umfassen, das zur Fixierung der Rückenlehne auf diese einwirkt, sowie ein sekundäres Verriegelungselement, welches das primäre Verriegelungselement in einer Lage blockiert, in der es die Fixierung der Rückenlehne bewirkt. Das sekundäre Verriegelungselement kann ferner dazu dienen, das primäre Verriegelungselement außer Eingriff mit der Rückenlehne zu bringen, wenn die Einstellung der Lehnenneigung geändert werden soll.

Nach einem anderen Aspekt der Erfindung weist eine Sitzanordnung für ein Kraftfahrzeug ein Sitzuntergestell auf, das eine Sitzfläche für einen Kraftfahrzeuginsassen definiert und sich in Sitzlängsrichtung erstreckt, sowie eine Rückenlehne, die an einer Gestellbaugruppe des entsprechenden Kraftfahrzeugsitzes angeordnet ist, wobei die Rückenlehne bezüglich des Sitzuntergestells mittels einer Hebelanordnung in Sitzlängsrichtung verschieblich ist.

Hierdurch kann zum einen die Sitzkissentiefe an die individuellen Bedürfnisse eines Kraftfahrzeuginsassen angepasst werden sowie andererseits zusätzlicher Stauraum hinter dem entsprechenden Fahrzeugsitz durch Verschieben der Rückenlehne nach vorne geschaffen werden.

Unter der Sitzlängsrichtung, entlang der sich das Sitzuntergestell erstreckt, wird dabei diejenige Richtung verstanden, entlang der sich die Oberschenkel einer auf dem entsprechenden Fahrzeugsitz befindlichen Person erstrecken. Bezogen auf den in ein Kraftfahrzeug eingebauten Zustand des Sitzes entspricht dies der Fahrzeuglängsrichtung (Fahrtrichtung).

Die Längsverschiebbarkeit der Rückenlehne kann ergänzend durch eine Längsführung, z.B. in Form einer Führungskulisse, erreicht werden, in der die Hebelanordnung, insbesondere ein Gelenkhebelpaar in Form einer Parallelogrammanordnung geführt ist.

Die Mittel zur Verschiebung der Rückenlehne in Sitzlängsrichtung können an der Gestellbaugruppe angreifen, an der die Rückenlehne vorklappbar und/oder neigungsverstellbar angelenkt ist. Hierdurch kann die Längsverschiebbarkeit der Rückenlehne mit der Einstellung der Neigung bzw. der Möglichkeit des Vorklappens der Rückenlehne kombiniert werden.

Nach einem weiteren Aspekt der Erfindung umfasst die Sitzanordnung eine in ihrer Neigung verstellbare, schwenkbar gelagerte Rückenlehne, die eine zum Abstützen des Rückens eines Sitzbenutzers dienende Vorderseite aufweist, sowie eine Federanordnung mit mindestens einem elastischen Element, mit der die Rückenlehne derart elastisch vorgespannt ist, dass sie die Tendenz hat, sich nach vorne zu neigen und sich mit Ihrer Vorderseite an den Rücken des Sitzbenutzers anzulegen. Die Neigung dieser Rückenlehne ist durch Krafteinwirkung auf die Vorderseite der Rückenlehne entgegen der Wirkung der Federanordnung verstellbar. D.h., die Rückenlehne nimmt im entriegelten Zustand der Neigungsverstellung unter der Wirkung der Federanordnung automatisch ihre vorderste Gebrauchsposition ein, in der sie zum Abstützen des Rückens eines Fahrzeuginsassen dient, und lässt sich unter der Einwirkung einer Druckkraft, aufgebracht z.B. durch den Rücken des Sitzbenutzers, in eine stärker nach hinten geneigte Gebrauchsposition verschwenken und in dieser Lage mittels einer Verriegelungseiririchtung arretieren.

Dabei greift die Federanordnung an einem Getriebeelement an, das mit der Rückenlehne in Wirkverbindung steht und dem eine Verriegelungseinrichtung zugeordnet ist, mit der das Getriebeelement in einer Mehrzahl unterschiedlicher Lagen verriegelbar ist.

Diese Gestaltung beruht auf dem technischen Prinzip, das Federelement, mit welchem die Rückenlehne in Richtung auf eine nach vorne geneigte Position vorgespannt ist, nicht an der Rückenlehne selbst angreifen zu lassen, sondern vielmehr an einem Getriebeelement, das entweder unmittelbar oder mittelbar über weitere Teile einer Getriebeanordnung mit der Rückenlehne verbunden ist. Dies ermöglicht zum einen eine Übersetzung des an dem Getriebeelement aufgrund der Vorspannkraft der Federanordnung wirkenden Drehmomentes, so dass das an der Rückenlehne selbst wirkende Drehmoment, welches die Tendenz hat, die Rückenlehne nach vorne zu verschwenken, durch Wahl des Übersetzungsverhältnisses gezielt eingestellt werden kann.

Ein wichtiger Vorteil liegt außerdem darin, dass durch die mittelbare Einwirkung der Federanordnung auf die Rückenlehne (über mindestens ein Getriebeelement) das üblicherweise mögliche Vorklappen der Rückenlehne auf die Sitzfläche und spätere Zurückklappen in eine Gebrauchsposition durch die Wirkung des Federelementes nicht beeinflusst wird. Insbesondere ist es beim Zurückklappen der Rückenlehne aus ihrer auf die Sitzfläche vorgeklappten Position in eine aufrechte (gegenüber der Vertikalen ggf. etwas geneigte) Gebrauchsposition nicht erforderlich, die Vorspannkraft der Federanordnung zu überwinden. Das Vorklappen der Rückenlehne kann einerseits erfolgen, um im Bereich des entsprechenden Kraftfahrzeugsitzes zusätzlichen Transportraum zu Verfügung zu stellen, oder andererseits zum Auslösen eines so genannten Easy-Entry-Mechanismus, der bei zweitürigen Kraftfahrzeugen den Einstieg zu einem der Rücksitze erleichtern soll, indem sich der Fahrzeugsitz mit vorgeklappter Rückenlehne in Sitzlängsrichtung in eine vordere Position verschieben lässt.

Das Getriebeelement, an dem die Federanordnung angreift, steht dabei vorzugsweise derart mit der Rückenlehne in Wirkverbindung, dass im verriegelten Zustand der dem Getriebeelement zugeordneten Verriegelungseinrichtung zugleich auch die Rückenlehne in ihrer jeweiligen Schwenkposition (Neigung bezüglich der Vertikalen) arretiert ist und dass im entriegelten Zustand der Verriegelungseinrichtung die Neigung der Rückenlehne verstellbar ist, und zwar entweder unter der Wirkung der Federanordnung nach vorne oder entgegen der Wirkung der Federanordnung nach hinten.

Das Getriebeelement kann dabei einen Bestandteil einer Getriebeanordnung, insbesondere einer Hebelanordnung, bilden, über die die Federanordnung mit der Rückenlehne in Wirkverbindung steht. Durch entsprechende Auslegung der Getriebeanordnung kann ein gewünschtes Übersetzungsverhältnis bei der Übertragung des von der Federanordnung auf das Getriebeelement ausgeübten Momentes auf die Rückenlehne eingestellt werden.

In einer besonders bevorzugten Weiterbildung der Erfindung ist dem mindestens einen Getriebeelement eine Kupplung zugeordnet, mittels der die Rückenlehne von dem Getriebeelement derart entkoppelbar ist, dass die Rückenlehne in Richtung auf die Sitzfläche des Kraftfahrzeugsitzes vorklappbar ist, ohne dass das Getriebeelement bewegt wird. Dies bedeutet zum einen, dass die Rückenlehne bei entsprechender Betätigung der Kupplung von der an dem Getriebeelement angreifenden Federanordnung gekoppelt ist, so dass das Federelement beim Vorklappen der Rückenlehne auf die Sitzfläche sowie einem späteren Zurückklappen der Rückenlehne in eine Gebrauchsposition nicht auf die Rückenlehne einwirkt.

Die Entkopplung der Rückenlehne von dem Getriebeelement wird nach einer Erfindungsvariante dadurch ermöglicht, dass die Schwenkachse der Rückenlehne beim Vorklappen der Rückenlehne auf die Sitzfläche (und ebenso beim anschließenden Zurückklappen in eine Gebrauchsposition) entlang einer durch eine Führungseinrichtung für die Schwenkachse vorgegebenen Bahnen geführt wird, welche derart gewählt ist, dass durch die Bewegung der Schwenkachse entlang der Bahn eine ansonsten mögliche Rückwirkung der Schwenkbewegung der Rückenlehne auf das Getriebeelement kompensiert (aufgehoben) wird.

Nach einer anderen Erfindungsvariante wird das Getriebeelement bei Betätigung der Kupplungseinrichtung mit der Rückenlehne vollständig außer Eingriff gebracht, so dass das Getriebeelement weder unmittelbar noch mittelbar (über weitere Bauelemente) mit der Rückenlehne in Verbindung steht. Diese Erfindungsvariante kann beispielsweise in der Art realisiert werden, dass das Getriebeelement (und ggf. weitere Elemente der Getriebeanordnung, über die das Getriebeelement mit der Rückenlehne in Verbindung steht) auf einer Basisplatte angeordnet sind, die derart bewegbar, insbesondere um eine Achse verschwenkbar ist, dass das Getriebeelement außer Eingriff mit der Rückenlehne gerät. Dabei ist die Basisplatte vorzugsweise elastisch in Richtung auf den Zustand vorgespannt, in dem das Getriebeelement mit der Rückenlehne in Verbindung steht, und muss entgegen dieser Vorspannung bewegt (verschwenkt) werden, um Getriebeelement und Rückenlehne außer Eingriff zu bringen.

Zum Bewegen, d.h. insbesondere zum Verschwenken, der Basisplatte ist ein mit der Basisplatte zusammenwirkendes Verstellelement in Form eines in einem Langloch der Basisplatte geführten Verstellhebels vorgesehen.

In einer Weiterbildung der Erfindung sind ferner Sperrmittel vorgesehen, mit denen die Kupplung sowohl in dem Zustand verriegelbar ist, indem das Getriebeelement mit der Rückenlehne gekoppelt ist, als auch in dem Zustand, in dem das Getriebeelement von der Rückenlehne entkoppelt ist.

Bei der erstgenannten Erfindungsvariante werden die Sperrmittel vorzugsweise durch einen schwenkbar gelagerten Verriegelungshebel gebildet, der im verriegelten Zustand an der Schwenkachse angreift und deren Bewegung entlang der durch die Führungseinrichtung definierten Bahn verhindert.

Bei der zweiten Erfindungsvariante werden die Sperrmittel vorzugsweise durch das vorstehend beschriebene Verstellelement in Form eines Verstellhebels gebildet, das auch zum Bewegen (Verschwenken) der Basisplatte dient und vorzugsweise mittels eines elastischen Elementes in Richtung auf den verriegelten Zustand vorgespannt ist.

Die dem Getriebeelement zugeordnete Verriegelungseinrichtung kann in bekannter Weise durch ein so genanntes primäres Verriegelungselement gebildet werden, welches im verriegelten Zustand eine Bewegung des Getriebeelementes blockiert, sowie durch ein sekundäres Verriegelungselement, welches wiederum das primär Verriegelungselement im verriegelten Zustand blockiert und zur Entriegelung der Verriegelungseinrichtung entgegen einer Vorspannkraft oder ein sonstigen in Richtung auf den verriegelten Zustand wirkenden Kraft betätigt werden muss.

Das Getriebeelement, auf das die der Rückenlehne zugeordnete Federanordnung erfindungsgemäß einwirkt, wird in einer bevorzugten Ausführungsform der Erfindung durch einen Zahnsegmenthebel gebildet, dessen Verzahnung mit einer zugeordneten Verzahnung des primären Verriegelungselementes in Eingriff bringbar ist.

Weitere Merkmale und Vorteile der Erfindung werden bei der nachfolgenden Beschreibung eines Ausführungsbeispiels anhand der Figuren deutlich werden.

Es zeigen:
- Fig. 1: eine schematische Darstellung eines Kraftfahrzeugsitzes mit einer neigungsverstellbaren Rückenlehne, die außerdem auf die Sitzfläche des Kraftfahrzeugsitzes vorklappbar ist;
- Fig. 2a, 2b: Einzelheiten einer Einrichtung zur Neigungsverstellung der Rückenlehne aus Figur 1;
- Fig. 3a, 3b: Einzelheiten einer Einrichtung zum Vorklappen der Rückenlehne aus Figur 1 auf die Sitzfläche;
- Fig. 4: eine Abwandlung der in den Figuren 2a und 2b dargestellten Einrichtung zur Neigungsverstellung der Rückenlehne;
- Fig. 5: eine Abwandlung der in den Figuren 3a und 3b dargestellten Einrichtung zum Vorklappen der Rückenlehne;
- Fig. 6: eine Anordnung mit einer Einrichtung zum Vorklappen einer nicht neigungsverstellbaren Rückenlehne;
- Fig. 7: eine weitere Abwandlung der in den Figuren 3a und 3b dargestellten Einrichtung zum Vorklappen der Rückenlehne;
- Fig. 8a, 8b: eine Einrichtung zum Verschieben einer Rückenlehne eines Kraftfahrzeugsitzes in Sitzlängsrichtung;
- Fig. 9a, 9b: eine Kombination einer Einrichtung zur Neigungsverstellung einer Rückenlehne eines Kraftfahrzeugsitzes mit einer Einrichtung zum Vorklappen der Rückenlehne auf die Sitzfläche sowie einer Einrichtung zum Verschieben der Rückenlehne in Sitzlängsrichtung;
- Fig. 10 - 11c: eine Abwandlung der Anordnung aus den Figuren 2a - 2b;
- Fig. 12a und 12b: eine perspektivische Darstellung und eine Seitenansicht eines Kraftfahrzeugsitzes mit einer in ihrer Neigung verstellbaren sowie zusätzlich auf die Sitzfläche vorklappbaren Rückenlehne mit variabler Schwenkachse;
- Figur 13: eine Detaildarstellung des Kraftfahrzeugsitzes aus den Figuren 12a und 12b im Bereich der Anbindung der Rückenlehne an das Sitzuntergestell zur Darstellung der Mittel, die die Neigungseinstellung sowie das Vorklappen der Rückenlehne ermöglichen;
- Figur 14: eine Abwandlung des Ausführungsbeispiels aus Figur 13 hinsichtlich der Mittel, die die Neigungseinstellung sowie das Vorklappen der Rückenlehne um eine variable Schwenkachse ermöglichen;

In sämtlichen Figuren sind die einzelnen Komponenten einer Sitzanordnung jeweils durchscheinend dargestellt.

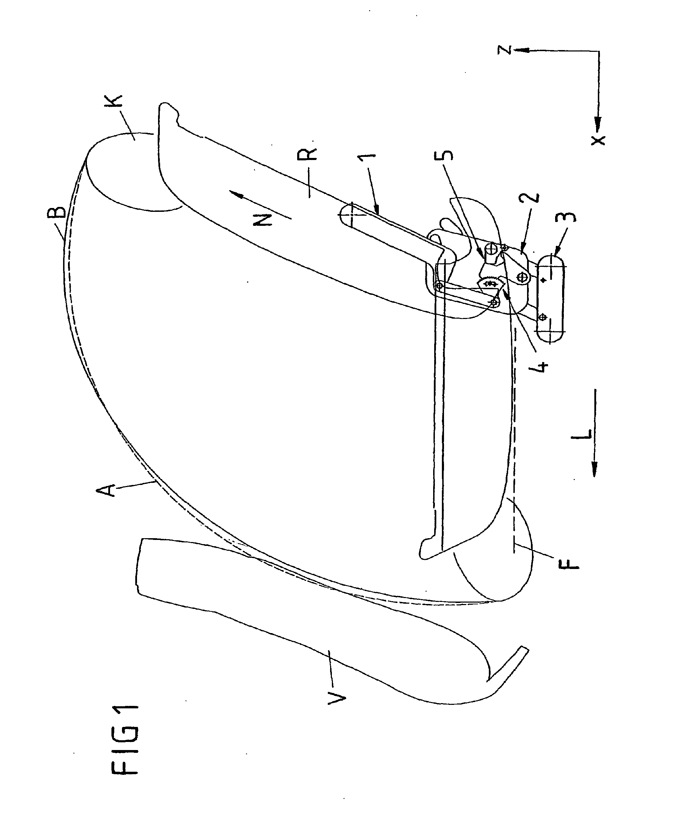

In Figur 1 ist eine Rückenlehne R eine Kraftfahrzeugsitzes mit Kopfstütze K einerseits in einer aufrechten Gebrauchsposition und andererseits in einer auf eine Sitzfläche F vorgeklappten, im wesentlichen horizontalen Position dargestellt. Die Sitzfläche F wird durch ein auf einem Sitzuntergestell Sitzpolster gebildet.

Die Rückenlehne R ist einerseits in ihrer Neigung N zwischen verschiedenen Gebrauchspositionen verstellbar. Diese Gebrauchspositionen zeichnen sich jeweils dadurch aus, dass die Rückenlehne in der jeweiligen Gebrauchsposition zum Abstützen des Rückens einer auf dem entsprechenden Kraftfahrzeugsitz befindlichen Person geeignet ist. Bezogen auf den in ein Kraftfahrzeug eingebauten Zustand eines Kraftfahrzeugsitzes erstreckt sich der Gebrauchsbereich üblicherweise von der senkrechten Ausrichtung der Rückenlehne R (entlang der vertikalen Fahrzeugachse z) bis hin zu einer stark nach hinten geneigten Rückenlehne R.

Darüber hinaus kann die Rückenlehne R in Richtung auf die durch das auf dem Sitzuntergestell angeordnete Sitzpolster gebildete Sitzfläche F vorgeklappt werden, um in dem Fahrzeug zusätzlichen Transportraum zu Verfügung zu stellen. Dies ist insbesondere von Bedeutung bei einem Rücksitz, wie er in Figur 1 dargestellt ist.

Beim Vorklappen der Rückenlehne R eines Rücksitzes besteht das Problem, dass die Oberseite der Rückenlehne bzw. die hierauf angeordnete Kopfstütze K mit der Rückenlehne eines Vordersitzes V kollidieren können. Dies wird deutlich anhand der in Figur 1 gestrichelt dargestellten Kurve A, die die Bewegung der Oberseite der Kopfstütze K beim Verschwenken der Rückenlehne R um eine definierte Achse im unteren Bereich der Rückenlehne illustriert. Es ist erkennbar, dass diese Kurve A die Rückenlehne des Vordersitzes V schneidet. Dies bedeutet, dass die Rückenlehne R des hinteren Sitzes sich nur dann auf die Sitzfläche F vorklappen lässt, wenn zuvor die Kopfstütze K entfernt worden ist. Dies mindert den Bedienkomfort der Einrichtung zum Vorklappen der Rückenlehne R.

Erfindungsgemäß ist nun die Einrichtung zum Vorklappen der Rückenlehne R auf die Sitzfläche F derart ausgestalten, dass sich die Schwenkachse, um die die Rückenlehne R beim Vorklappen auf die Sitzfläche F verschwenkt wird, während des Vorklappens der Rückenlehne derart bewegt, dass eine Kollision der Oberkante der Kopfstütze K mit dem Vordersitz V vermieden wird.

Eine entsprechende Bahnkurve B der Oberkante der Kopfstütze K ist in Figur 1 mit einer durchgezogenen Linie dargestellt. Es ist erkennbar, dass die Schwenkachse sich während des Vorklappens der Rückenlehne zunächst einerseits nach oben (entlang der vertikalen Fahrzeugachse z) und andererseits nach hinten (entgegen der Fahrzeuglängsachse x) bewegt. Hierdurch ist die korrigierte Bahnkurve B gegenüber der ursprünglichen Bahnkurve A (die sich beim Umklappen der Rückenlehne um eine nicht bewegte Schwenkachse ergibt) etwas nach oben (entlang der vertikalen Fahrzeugachse z) sowie etwas nach hinten (entgegen der Fahrzeuglängsrichtung x) verschoben. Dies verhindert eine Kollision der Oberkante der Kopfstütze K mit der Rückenlehne des Vordersitzes V.

Darüber hinaus ist die Rückenlehne R des in Figur 1 dargestellten Fahrzeugsitzes in Sitzlängsrichtung L gegenüber dem Sitzuntergestell U und der Sitzfläche F verschiebbar. Die Sitzlängsrichtung L ist dabei definiert als diejenige Richtung, entlang der sich das Sitzuntergestell sowie das hierauf angeordnete, die Sitzfläche F bildende Sitzpolster erstrecken. Bei einem in ein Kraftfahrzeug eingebauten Fahrzeugsitz entspricht die Sitzlängsrichtung L der Fahrzeuglängsachse x. D.h., die Sitzlängsrichtung L entspricht derjenigen Richtung entlang der ein Fahrzeugsitz üblicherweise mittels einer Sitzlängsverstellung verschiebbar ist.

Die Verschiebung der Rückenlehne R in Sitzlängsrichtung L (bzw. Fahrzeugslängsrichtung x) bezüglich des Sitzuntergestells und der Sitzfläche F kann unterschiedlichen Zwecken dienen: Zum einen kann hierdurch die Sitzkissentiefe verstellt werden, um diese an die individuellen Bedürfnisse eines Fahrzeuginsassen anzupassen. Zum anderen kann durch Verschieben der Rückenlehne R in Sitzlängsrichtung L nach vorne hinter der Rückenlehne R zusätzlicher Stauraum gewonnen werden. Umgekehrt kann durch Verschieben der Rückenlehne R nach hinten zusätzlich dazu beigetragen werden, dass die Rückenlehne R beim Vorklappen nicht mit dem Vordersitz V kollidiert.

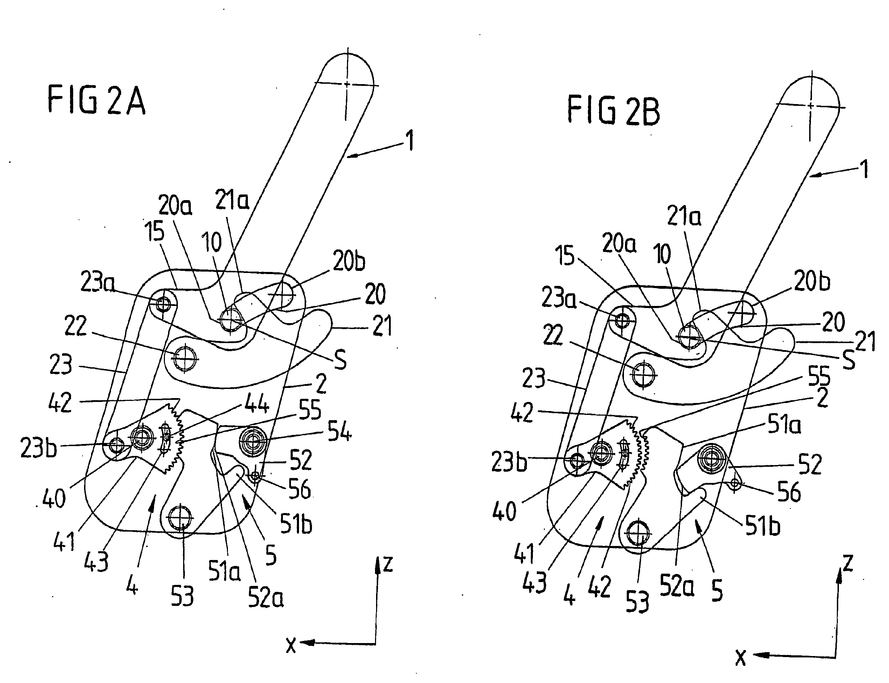

Die Baugruppen 1, 2, 3, 4, 5 des in Figur 1 dargestellten Kraftfahrzeugsitzes, die die Verstellung der Neigung der Rückenlehne, das Vorklappen der Rückenlehne auf die Sitzfläche, sowie das Verschieben der Rückenlehne in Sitzlängsrichtung ermöglichen, werden nachfolgend anhand der Figuren 2a bis 9b näher erläutert werden.

Figur 2a zeigt einen Lehnenbeschlag 1, an dem die in Figur 1 dargestellte Rückenlehne R eines Kraftfahrzeugsitzes befestigbar ist und der im Bereich seines entlang der vertikalen Fahrzeugachse z unteren Endes einen Lagerzapfen 10 aufweist, über den er schwenkbar an einer Gestellbaugruppe 2 in Form einer Tragplatte des Sitzgestells gelagert ist. Der Lagerzapfen 10 des Lehnenbeschlages 1 ist in einer Führungskulisse 20 der Tragplatte 2 schwenkbar gelagert, so dass der Lagerzapfen 10 und damit die Schwenkachse S des Lehnenbeschlages 1 durch Verschiebung entlang der Führungskulisse 20 zwischen einem ersten Ende 20a und einem zweiten Ende 20b der Führungskulisse bewegt werden können.

In dem in Figur 2a dargestellten Zustand wird eine solche Bewegung des Lagerzapfens 10 entlang der Führungskulisse 20 durch eine Verriegelungsnase 21 a eines um eine Lagerstelle 22 der Tragplatte 2 schwenkbar gelagerten Verriegelungshebels 21 verhindert, der den Lagerzapfen 10 übergreift und dadurch dessen Bewegung entlang der Führungskulisse 20 sperrt.

Der Lehnenbeschlag 1 weist ferner einen Fortsatz 15 auf, über den der Lehnenbeschlag 1 von dem Lagerzapfen 10 beabstandet mittels eines Koppelhebels 23 mit einer Verstellschwinge 41 einer Einrichtung 4 zur Neigungsverstellung des Lehnenbeschlages 1 gekoppelt ist. Der Koppelhebel 23 ist hierzu an seinem einen, oberen Ende 23a mit dem Fortsatz 15 des Lehnenbeschlages 1 und mit seinem anderen, unteren Ende 23b mit der Verstellschwinge 41 gelenkverbunden. Die Verstellschwinge 41 ist um eine an der Tragplatte 2 vorgesehene Lagerstelle 40 verschwenkbar und weist eine Außenverzahnung 42 auf, die mit einer Verriegelungseinrichtung 5 derart in Eingriff steht, dass eine Schwenkbewegung der Verstellschwinge 41 in dem in Figur 2 dargestellten Zustand nicht möglich ist.

Die Verstellschwinge 41 weist darüber hinaus eine Kulisse 43 auf, in die ein an der Tragplatte 2 vorgesehener Zapfen 44 eingreift und die somit der Begrenzung des möglichen Schwenkbereiches der Verstellschwinge 41 dient.

Die der Verstellschwinge 41 zugeordnete Verstelleinrichtung 5 umfasst ein primäres Verriegelungselement 51, das als Verriegelungshebel um eine an der Tragplatte 2 vorgesehene Lagerstelle 53 verschwenkbar ist und das einen Verzahnungsbereich 55 aufweist, der in den Verzahnungsbereich 42 der Verstellschwinge 41 eingreift, um diese zu arretieren. Dem primären Verriegelungselement 51 zugeordnet ist ein ebenfalls als Verriegelungshebel ausgebildetes, um eine weitere Lagerstelle 54 verschwenkbares sekundäres Verriegelungselement 52, das mit einem Anschlag 52a an einem zugeordneten Anschlag 51 a des primären Verriegelungselementes 51 anliegt und dadurch eine Schwenkbewegung des primären Verriegelungselementes 51 verhindert, die die Verzahnung der Verstellschwinge 41 freigäbe.

An dem sekundären Verriegelungselement 52 ist eine Kraftangriffstelle 56 vorgesehen, an der eine Kraft eingeleitet werden kann, die zu einem Verschwenken des sekundären Verriegelungselementes 52 führt, so dass die einander zugeordneten Anschläge 51 a, 52a der beiden Verriegelungselemente 51, 52 außer Eingriff geraten. Für das Auslösen der entsprechenden Schwenkbewegung des sekundären Verriegelungselementes 52 können beliebige physikalische bzw. technische Prinzipien verwendet werden, beispielsweise ein Aktor in Form eines Elektromagneten oder eines Elektromotors oder alternativ eine manuelle Betätigungseinrichtung usw..

Das primäre Verriegelungselement 51 ist vorzugsweise mittels eines in Figur 2a nicht dargestellten elastischen Elementes derart vorbelastet, dass es nach dem Verschwenken des primären Verriegelungselementes automatisch derart um seine Schwenkachse 53 gedreht wird, dass es die Verzahnung der Verstellschwinge 41 freigibt, vergl. Figur 2b. Alternativ kann beim Verschwenken des sekundären Verriegelungselementes 52 dieses auf einen Fortsatz 51 b des primären Verriegelungselementes 51 einwirken und dadurch eine Schwenkbewegung des primären Verriegelungselementes 51 bewirken, durch die dessen Verzahnung 55 mit der zugeordneten Verzahnung 42 der Verstellschwinge 41 außer Eingriff gerät.

In dem in Figur 2b dargestellten Zustand kann nun eine Veränderung der Neigung des Lehnenbeschlages 1 und damit der Rückenlehne R dadurch vorgenommen werden, dass manuell eine Kraft unmittelbar auf die Rückenlehne selbst ausgeübt wird. Hierdurch wird die Neigung des Lehnenbeschlages 1 aufgrund einer Schwenkbewegung um die durch den Lagerzapfen 10 definierte Schwenkachse S neu eingestellt. Die Schwenkachse S bewegt sich hierbei nicht, da der Lagerzapfen 10 mittels der Verriegelungsnase 21 a des Verriegelungshebels 21 an dem ersten Ende 20a der Führungskulisse 20 fixiert ist. Die Einstellung der Neigung der Rückenlehne R erfolgt also durch eine Schwenkbewegung um die örtlich fixierte Achse S.

Nach Abschluss der Verstellbewegung wird dann die aktuelle Neigungseinstellung des Lehnenbeschlages 1 mittels der Verriegelungseinrichtung 5 fixiert, indem das sekundäre Verriegelungselement 52 wieder in die Position verschwenkt wird, in der es derart auf das primäre Verriegelungselement 51 einwirkt, dass dieses die mit dem Lehnenbeschlag 1 über den Koppelhebel 23 gekoppelte Verstellschwinge 41 arretiert.

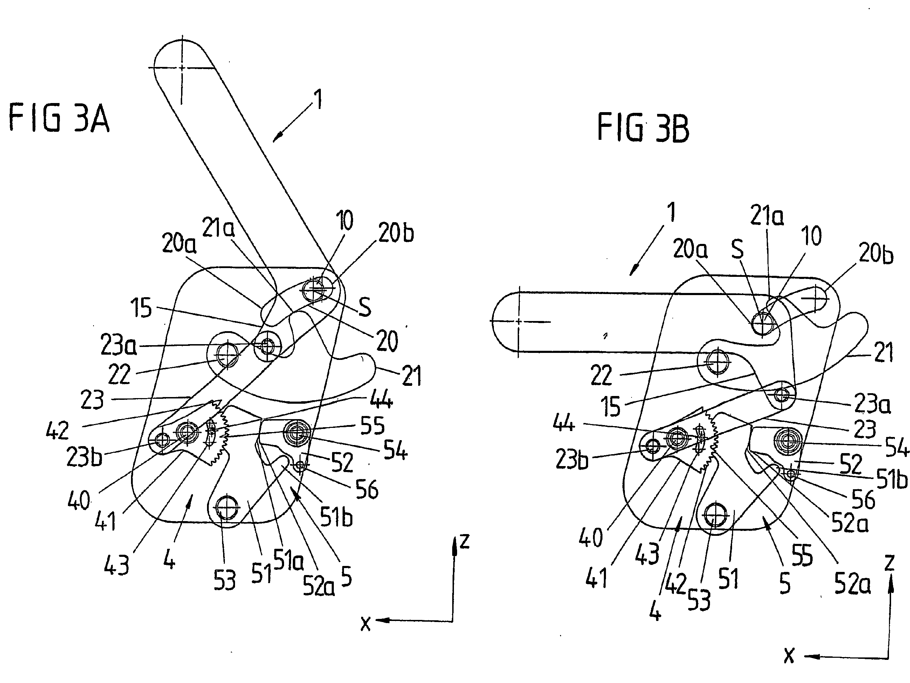

In den Figuren 3a und 3b ist dargestellt, wie mit der anhand der Figuren 2a und 2b erläuterten Anordnung das Vorklappen des Lehnenbeschlages 1 ermöglicht wird, so dass die Rückenlehne R auf die Sitzfläche F vorgeklappt wird, vgl. Figur 1.

Figur 3a zeigt die Anordnung dabei in einem Zustand, in dem der Lehnenbeschlag knapp die Hälfte seines Weges beim Vorklappen auf die Sitzfläche zurückgelegt hat, und Figur 3b zeigt den komplett vorgeklappten Lehnenbeschlag 1.

Das Vorklappen des Lehnenbeschlages 1 wird dadurch ermöglicht, dass zunächst die Verriegelungsnase 21 a durch Verschwenken des Verriegelungshebels 21 um seine Schwenkachse 22 außer Eingriff mit dem die Schwenkachse S des Lehnenbeschlages 1 bildenden Lagerzapfen 10 gebracht worden ist, vergl. Figur 3a. Die hierfür erforderliche Schwenkbewegung des Verriegelungshebels 21 kann manuell oder fremdkraftbetätigt (z.B. elektrisch) mittels eines geeigneten Aktors ausgelöst werden

Nach dem Entriegeln des Lagerzapfens 10 und somit der Schwenkachse S kann nun die Rückenlehne R (vergl. Figur 1) zusammen mit dem Lehnenbeschlag 1 in Richtung auf die Sitzfläche F des Fahrzeugsitzes vorgeklappt werden, indem die Rückenlehne R von einer Person ergriffen und zu der Sitzfläche F hin bewegt wird. Bei dieser Klappbewegung der Rückenlehne R und des Lehnenbeschlages 1 bewegt sich der Lagerzapfen 10, der die jeweils momentane Schwenkachse S des Lenkbeschlages 1 beim Vorklappen definiert, in der Führungskulisse 20 zwischen deren erstem Anschlag 20a und deren zweitem Anschlag 20b.

Die Bewegung des Lagerzapfens 10 in der Führungskulisse 20 wird durch den Koppelhebel 23 gesteuert, über den der Lehnenbeschlag 1 außerhalb seiner Schwenkachse S mit der Verstellschwinge 41 gekoppelt ist. Da die Verstellschwinge 41 beim Vorklappen der Rückenlehne bzw. des Lehnenbeschlages 1 mittels der zugeordneten Verriegelungseinrichtung 5 verriegelt ist, ist der Lehnenbeschlag 1 beim Vorklappen über den Koppelhebel 23 an ein gestellfestes (bezüglich der Tragplatte 2 nicht bewegliches Element) gekoppelt.

Unter der Einwirkung des Koppelhebels 23 auf den Lehnenbeschlag 1 bewegt sich der Lagerzapfen 10 des Lehnenbeschlages 1 beim Vorklappen des Lehnenbeschlages von dem ersten Ende 20a zu dem zweiten Ende 20b der Führungskulisse 20 und dann wieder zurück zu dem ersten Ende 20a. Bei komplett vorgeklapptem Lehnenbeschlag 1 befinden sich somit der Lagerzapfen 10 und die Schwenkachse S wieder an derselben Stelle, wie bei Beginn der Klappbewegung. Dies wird auch deutlich anhand Figur 1, wonach die beiden Kurven A (entsprechend dem Vorklappen der Rückenlehne R bei örtlich festgehaltener Schwenkachse) und B (entsprechend dem Vorklappen der Rückenlehne R bei räumlich variabler Schwenkachse) am Beginn der Klappbewegung (bei aufrecht gestellter Rückenlehne) und am Ende der Klappbewegung (bei komplett vorgeklappter Rückenlehne) jeweils zusammenfallen.

Der Übergang von der in Figur 1 gestrichelt dargestellten Bahnkurve A (Klappbewegung bei räumlich fixierter Schwenkachse) zu der durchgezogen dargestellten Bahnkurve B (bei räumlich veränderlicher Schwenkachse), wobei die zweitgenannte Bahnkurve B gegenüber der erstgenannten Bahnkurve A nach oben (entlang der vertikalen Fahrzeugachse z) und nach hinten (entgegen der Fahrzeuglängsachse x) versetzt ist, wird dadurch erreicht, dass sich die Führungskulisse in der Tragplatte 2 von ihrem ersten Ende 20a zu ihrem zweiten Ende 20b schräg nach oben und nach hinten erstreckt, also eine Komponente entlang der vertikalen Fahrzeugachse z und entgegen der Fahrzeuglängsachse x aufweist. Außerhalb der beiden Endpunkte der Klappbewegung befinden sich somit der Lagerzapfen 10 und die Schwenkachse S stets über und hinter der Position, die sie am Beginn der Klappbewegung eingenommen haben. Jene Position ist wiederum dadurch definiert, dass der Lagerzapfen 10 vor Beginn der Klappbewegung an dem ersten, vorderen/unteren Anschlag 20a der Führungskulisse 20 anliegt.

Insbesondere wird die Schwenkachse S beim Vorklappen der Rückenlehne R zumindest während des ersten Teiles der Klappbewegung entlang einer Richtung (mit einer Komponente nach hinten entgegen der Fahrzeuglängsachse x und einer Komponente nach oben entlang der vertikalen Fahrzeugachse z) bewegt, die der Richtung der Klappbewegung (mit einer Komponente nach vorne entlang der Fahrzeuglängsachse x und einer Komponente nach hinten entgegen der vertikalen Fahrzeugachse z) im wesentlichen entgegengesetzt ist.

Ausgehend von dem ersten Anschlag 20a der Führungskulisse 20 wird die weitere Bewegung des Lagerzapfens 10 in der Führungskulisse 20 zwischen den beiden Anschläge 20a, 20b durch den Koppelhebel 23 gesteuert. Die Führungskulisse 20 legt somit fest, entlang welcher Bahn der Lagerzapfen 10 und die Schwenkachse S beim Vorklappen des Lehnenbeschlages 1 bewegt werden können und der Koppelhebel 23 bestimmt die Bewegung entlang dieser Bahn.

Durch Veränderung der Geometrie der Führungskulisse 20 sowie durch Variation der Anordnung des Koppelhebels 23 lassen sich so beliebige andere Bahnen erzeugen, entlang derer die Schwenkachse S des Lehnenbeschlages 1 beim Vorklappen des Lehnenbeschlages 1 bewegt werden kann, um eine definierte, gewünschte Bewegung der Rückenlehne beim Vorklappen zu erreichen.

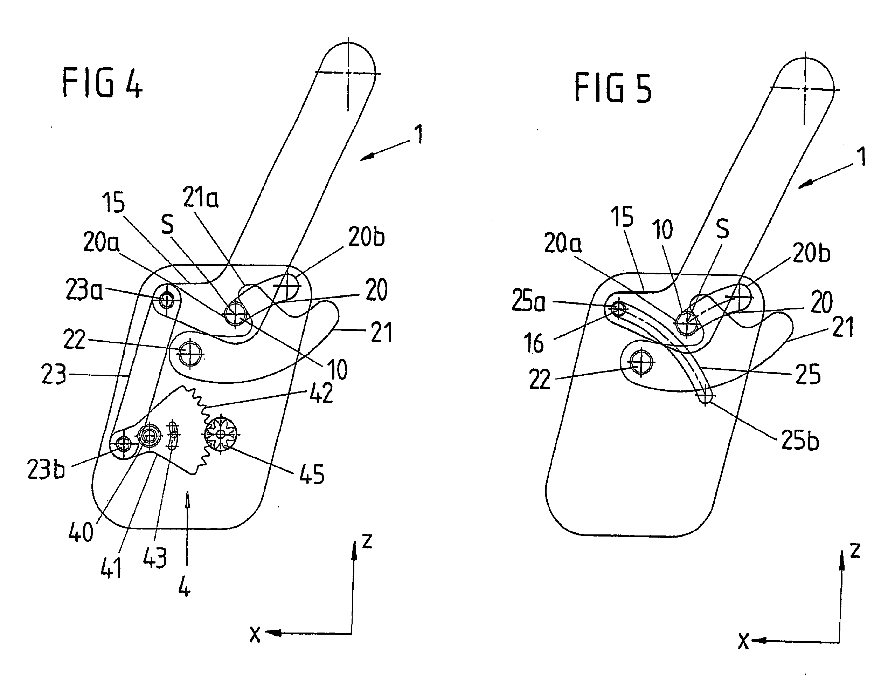

Figur 4 zeigt eine Abwandlung der Anordnung aus den Figuren 2a bis 3b dahingehend, dass die Verstellschwinge 41 über ihre Verzahnung 42 mit einem Antriebsritzel 45 zusammenwirkt, das zur Einstellung der Neigung des Lehnenbeschlages manuell oder fremdkraftbetätigt (insbesondere elektromotorisch) drehbar ist. Eine Drehbewegung des Antriebsritzels 4 wird umgesetzt in eine Schwenkbewegung der Verstellschwinge 41 um ihre Schwenkachse 40, die über den Koppelhebel 23 auf den Lehnenbeschlag 1 übertragen wird und somit zu einer Änderung der Neigungseinstellung des Lehnenbeschlages 1 führt.

Die Arretierung des Lehnenbeschlages 1 in einer bestimmten Neigungsposition kann dabei dadurch erreicht werden, dass die das Antriebsritzel 45 antreibende Antriebseinrichtung selbsthemmend ausgelegt ist oder mit einer separaten Bremseinrichtung gekoppelt ist. In jedem Fall muss verhindert werden, dass sich das Antriebsritzel 45 bei einem abtriebsseitig, also von Seiten der Verstellschwinge 41, aufgebrachten Drehmoment bewegt.

Figur 5 zeigt eine weitere Abwandlung der Anordnung aus den Figuren 2a bis 3b. Zum einen ist bei der Anordnung gemäß Figur 5 keine Einrichtung zur Verstellung der Neigung des Lehnenbeschlages 1 vorgesehen. Der Lehnenbeschlag 1 ist hier also ausschließlich auf die Sitzfläche vorklappbar, nicht aber in seiner Neigung zwischen unterschiedlichen Gebrauchspositionen verstellbar. Eine solche Anordnung eignet sich insbesondere zur Verwendung bei Rücksitzen von Kraftfahrzeugen.

Ferner ist der Koppelhebel 23 aus den Figuren 2a bis 3b, über den der Lehnenbeschlag 1 außerhalb seiner Schwenkachse S mit einem gestellfesten Element gekoppelt ist, vorliegend ersetzt durch eine Steuerkulisse 25, in der der Fortsatz 15 des Lehnenbeschlages 1 mittels eines am Fortsatz 15 vorgesehenen Führungselementes 16 zwischen einem ersten Ende 25a und einem zweiten Ende 25b geführt ist. Wie der Koppelhebel 23 aus den Figuren 2a bis 3b übernimmt die Steuerkulisse 25 aus Figur 5 die Funktion, die Bewegung des Lagerzapfens 10 und der Schwenkachse S in der Führungskulisse 20 zu steuern.

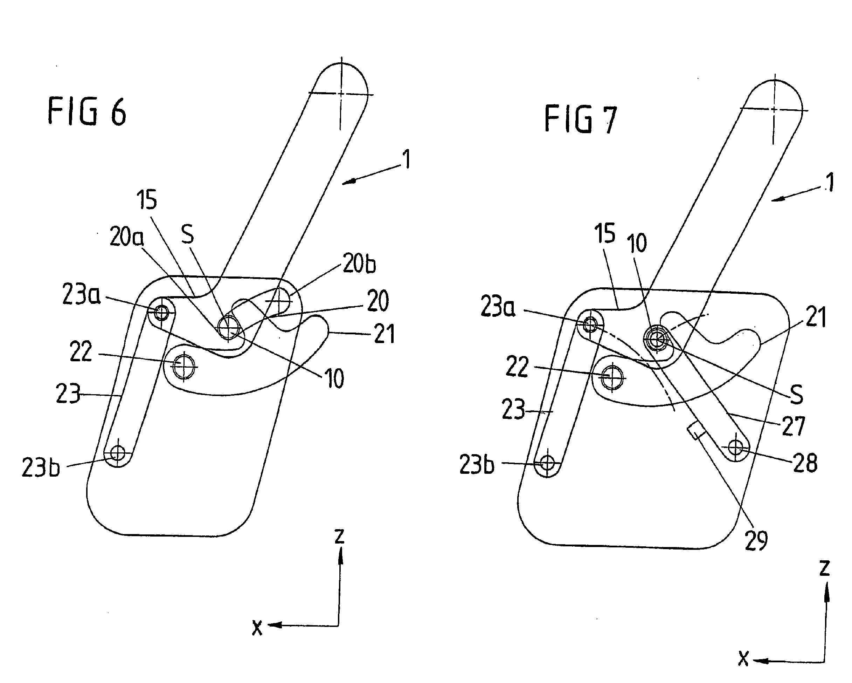

Figur 6 zeigt eine dritte Abwandlung der Anordnung aus den Figuren 2a bis 3b, wobei der einzige Unterschied darin besteht, dass auf eine Einrichtung zur Einstellung der Lehnenneigung zwischen verschiedenen Gebrauchspositionen verzichtet worden ist. Stattdessen ist der Koppelhebel 23 an seinem unteren Ende 23b unmittelbar an der Tragplatte 2 schwenkbar angelenkt.

Bei der in Figur 7 dargestellten vierten Abwandlung der Anordnung aus den Figuren 2a bis 3b ist die Führungskulisse 20 durch einen Führungshebel 27 ersetzt, der schwenkbar an einer Lagerstelle 28 der Tragplatte 2 angeordnet ist, und der an seinem der Lagerstelle 28 abgewandten freien Ende mit dem Lagerzapfen 9 des Lehnenbeschlages 1 gelenkig verbunden ist bzw. diesen drehbar aufnimmt. In diesem Fall muss eine zusätzliche, in Figur 7 nicht dargestellte Einrichtung zur Verriegelung des Führungshebels 27 in der einen bzw. den beiden Endlagen vorgesehen sein, die der in einer Gebrauchsposition positionierten bzw. der auf die Sitzfläche vorgeklappten Rückenlehne entsprechen. An dem Führungshebel 27 ist dabei ein Anschlag 29 vorgesehen, der eine Endlage beim Verschwenken des Führungshebels 27 definiert und hierdurch die Funktion der Endanschläge einer Führungskulisse übernimmt.

Bei diesem Ausführungsbeispiel wird also eine Bewegung des Lagerzapfens 10 bzw. der Schwenkachse S des Lehnenbeschlages 1 beim Vorklappen dadurch bewirkt, dass der Führungshebel 27 um seine durch die Lagerstelle 28 gebildeten Achse verschwenkt. Die Steuerung dieser Bewegung erfolgt wie bei dem Ausführungsbeispiel gemäß Figur 6 durch den Koppelhebel 23, der unmittelbar an der Tragplatte 2 angelenkt ist.

Die Anordnung aus Figur 7 bildet somit ein Viergelenk als Einrichtung zum Vorklappen der Rückenlehne auf eine Sitzfläche.

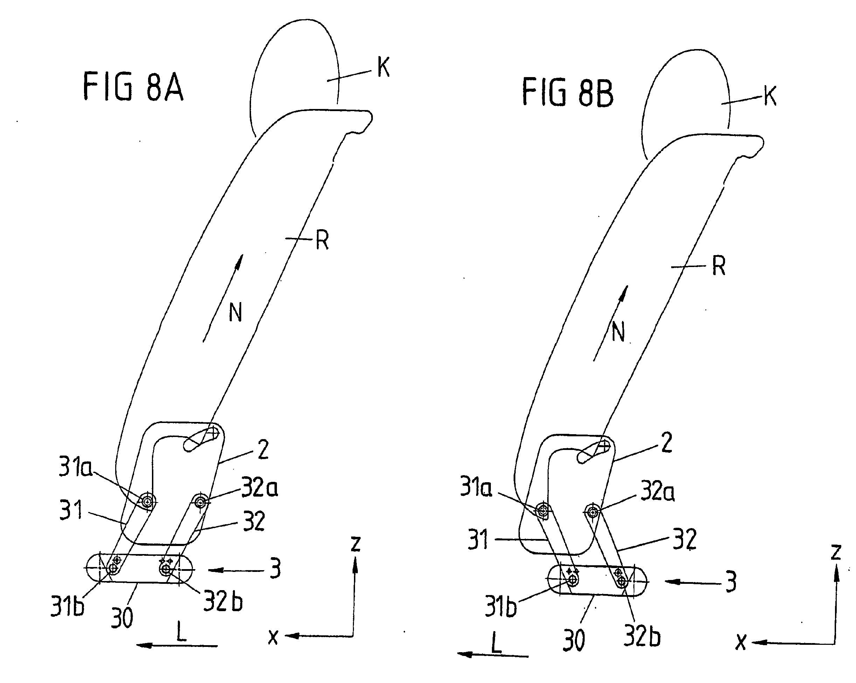

Die Figuren 8a und 8b zeigen einen weiteren Aspekt der Erfindung, wonach die Rückenlehne R eines Kraftfahrzeugsitzes in Sitzlängsrichtung L (vergl. Figur 1) bzw. Fahrzeuglängsrichtung x bezüglich des Sitzuntergestells und der zugehörigen Sitzfläche F bewegbar ist. Dies wird vorliegend dadurch erreicht, dass die Gestellbaugruppe (Tragplatte 2), an der die Rückenlehne R angeordnet ist, in Fahrzeuglängsrichtung x verschiebbar ist.

Die Verschiebbarkeit der Tragplatte 2 in Fahrzeuglängsrichtung x wird dadurch ermöglicht, dass die Tragplatte 2 im Bereich ihres in Fahrzeuglängsrichtung x vorderen Endes sowie im Bereich ihres in Fahrzeuglängsrichtung x hinteren Endes jeweils über einen Verstellhebel 31 bzw. 32 mit einer Bodenbaugruppe 30 gelenkverbunden ist. Die beiden Verstellhebel 31, 32 bilden eine Parallelogrammanordnung, wie sie auch zur Verstellung kompletter Sitzgestelle bekannt ist, und sind jeweils mit ihrem oberen Ende 31 a bzw. 32a an der Tragplatte 2 und ihrem unteren Ende 31 b bzw. 32b an der Bodenbaugruppe 30 angelenkt. Durch gemeinsames Verschwenken der Verstellhebel 31, 32, die hierbei stets parallel ausgerichtet sind, lässt sich die Rückenlehne R in Fahrzeuglängsrichtung nach vorne bewegen (Figur 8b) bzw. wieder nach hinten bewegen (Figur 8a).

Sofern bei der Verstellung der Rückenlehne R in Fahrzeuglängsrichtung x die Höhe der Rückenlehne R entlang der vertikalen Fahrzeugachse z konstant bleiben soll, müssen die Verstellhebel 31, 32 in ihrer zweiten Endlage (Figur 8b) eine entgegengesetzt gleiche Neigung zur vertikalen Fahrzeugachse z aufweisen wie in ihrer ersten Endlage (Figur 8a). In diesem Fall lassen sich mittels der durch die Verstellhebel 31, 32 gebildeten Verstelleinrichtung 3 lediglich zwei unterschiedliche Längspositionen der Rückenlehne R einstellen, wie in Figur 8a und 8b dargestellt.

Wird demgegenüber bei der Verstellung der Rückenlehne R in Fahrzeuglängsrichtung x auch eine Änderung der Position der Rückenlehne entlang der vertikalen Fahrzeugachse z in Kauf genommen, so können auch mehr als zwei Positionen in Fahrzeuglängsrichtung x einstellbar sein. Es müssen dann entsprechende Verriegelungselemente, z.B. in Form von Rastelementen, vorgesehen sein, die eine Arretierung der Rückenlehne R in den einzelnen Längspositionen ermöglichen.

Bei dem in den Figuren 8a und 8b dargestellten Ausführungsbeispiel ist eine Verstellung der Rückenlehne R in Fahrzeuglängsrichtung x lediglich zwischen den beiden in Figur 8a bzw. Figur 8b dargestellten Endlagen vorgesehen. Diese Endlagen sind jeweils stabil, wenn entsprechende Begrenzungsmittel, z.B. in Form von Anschlägen, oder andere Verriegelungsmittel vorgesehen sind, die ein weiteres Verschwenken der Verstellhebel 31, 32 über die jeweilige Endlage hinaus verhindern bzw. mit den die Verstellhebel 31, 32 in der jeweiligen Endlage verriegelbar sind.

Die Bodenbaugruppe 30 kann außerdem in einer Längsführung in Fahrzeuglängsrichtung x verschieblich geführt sein.

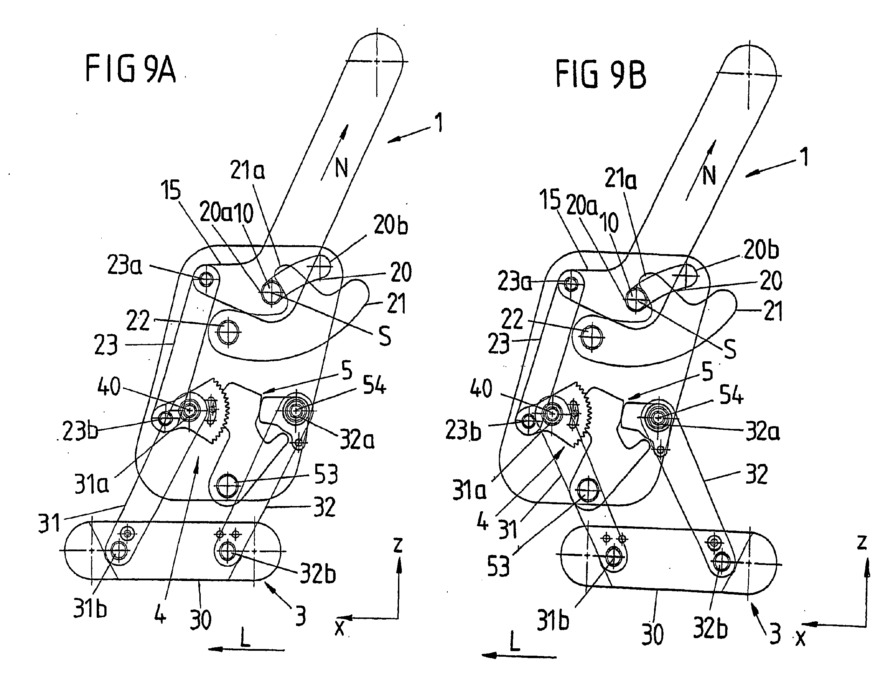

Die Figuren 9a und 9b zeigen eine Kombination der Verstelleinrichtung aus den Figuren 8a und 8b mit den Verstelleinrichtungen aus den Figuren 2a bis 3b. Hierdurch wird eine Verstellung des Lehnenbeschlages 1 in Sitzlängsrichtung x ermöglicht, sowie eine Einstellung der Neigung N des Lehnenbeschlages 1 und außerdem ein Vorklappen des Lehnenbeschlages 1 in Richtung auf die Sitzfläche des entsprechenden Fahrzeugsitzes. In diesem Fall sind die beiden Verstellhebel 31, 32 mit ihren oberen Enden 31a, 32a an der Lagerstelle 40 der Verstellschwinge 41 bzw. der Lagerstelle 54 des sekundären Verriegelungselementes 52 angelenkt.

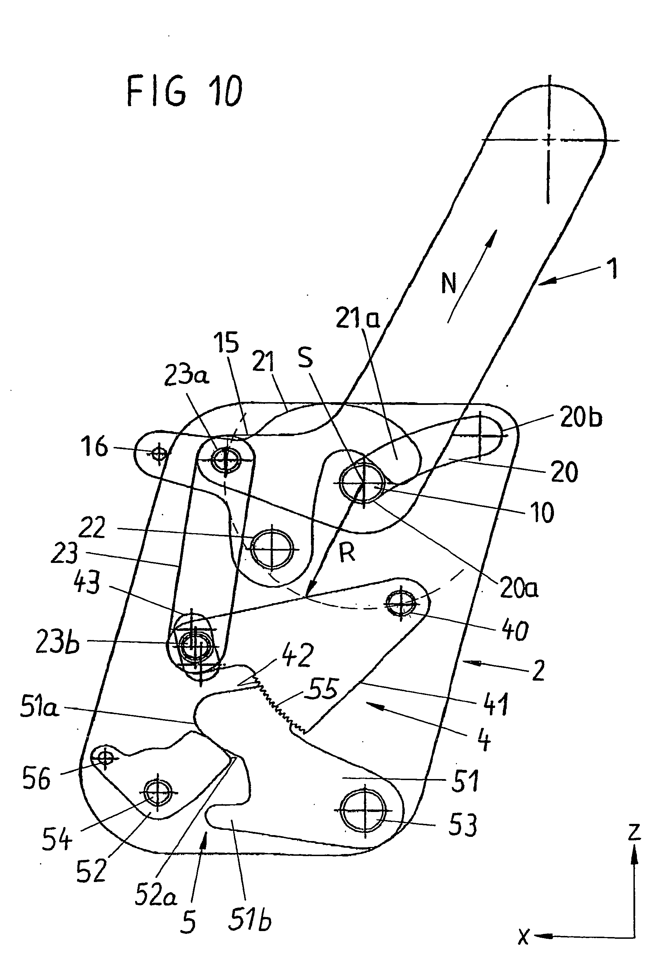

Die in Figur 10 dargestellte Anordnung, die eine Einrichtung 4 zur Verstellung des Neigungswinkels der Rückenlehne in einer aufrechten Gebrauchsposition mit einer zugeordneten Verriegelungseinrichtung 5 sowie eine Einrichtung zum Vorklappen der Rückenlehne auf eine Sitzfläche aufweist, entspricht im Wesentlichen der in den Figuren 2a bis 3b dargestellten Anordnung. Nachfolgend wird insoweit nur auf die wesentlichen technischen Unterschiede eingegangen. Hinsichtlich der übrigen Bestandteile der in Figur 10 dargestellten Anordnung wird auf die entsprechenden Ausführungen zu den Figuren 2a bis 3b verwiesen, wobei übereinstimmende Bauelemente bzw. Baugruppen in Figur 10 jeweils mit den gleichen Bezugszeichen versehen sind wie in den Figuren 2a bis 3c.

Zunächst sei bemerkt, dass bei der in Figur 10 dargestellten Anordnung zwei Bauelemente, nämlich der Lehnenbeschlag 1 und der Koppelhebel 23 auf einer anderen Seite der Tragplatte 2 angeordnet sind (nämlich auf deren zweiter Seite bzw. Rückseite) als die übrigen Baugruppen, nämlich der Verriegelungshebel 21, die Verstellschwinge 41 und die Verriegelungseinrichtung 5, die jeweils auf einer ersten Seite (Vorderseite) der Tragplatte 2 angeordnet sind. Die Anordnung der vorgenannten Baugruppen auf unterschiedlichen Seiten der Tragplatte 2 ist in Figur 10 nicht erkennbar, da vorliegend die einzelnen Bauelemente und Baugruppen in sämtlichen Figuren jeweils durchscheinend dargestellt sind. Die Anordnung einzelner Baugruppen auf unterschiedlichen Seiten der Tragplatte 2 ist erforderlich, um eine Kollision der Baugruppen bei einem Einstellvorgang zu verhindern.

Bei der in Figur 10 dargestellten Anordnung ist von Bedeutung, dass die durch die Anlenkstelle 23a des Koppelhebels 23 am Fortsatz 15 des Lehnenbeschlags 1 gebildete Achse sowie die durch die Lagerstelle 40 des Verstellhebels 41 gebildete Achse auf einer Kreisbahn liegen, deren Mittelpunkt durch die Schwenkachse S des Lehnenbeschlages 1 gebildet wird und die bezüglich dieses Mittelpunktes einen definierten Radius R aufweist.

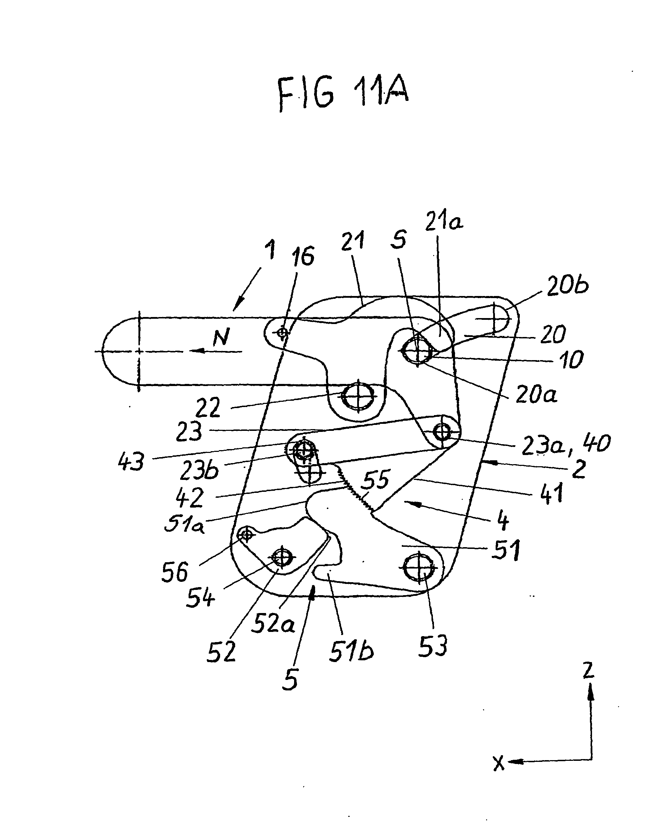

Wird nun der Lehnenbeschlag 1 der Rückenlehne, wie zuvor beispielhaft anhand der Figuren 3a und 3b beschrieben, durch Entriegeln des Lagerzapfens 10 und anschließendes Vorklappen der Rückenlehne, aus seiner in Figur 10 dargestellten aufrechten Position (entsprechend einer Gebrauchsposition der Rückenlehne) in eine im Wesentlichen waagerechte Position nach vorne geklappt (entsprechend einer auf die Sitzfläche vorgeklappten Position der Rückenlehne), so geraten hierdurch die durch die eine Anlenkstelle 23a des Koppelhebels 23 gebildete Achse sowie die durch die Lagerstelle 40 der Verstellschwinge 41 gebildete Achse zur Deckung, wie anhand der Figuren 11a bis 11c dargestellt, und fallen somit zuammen.

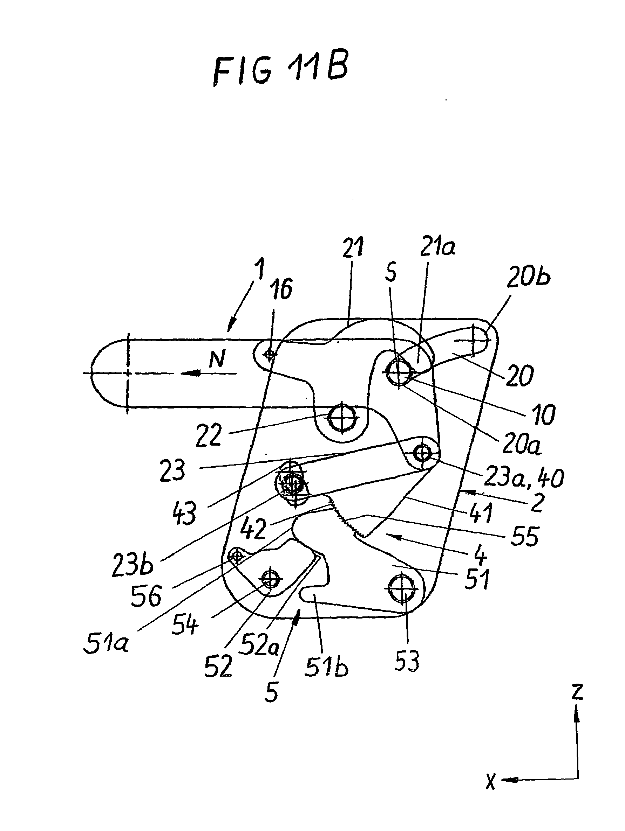

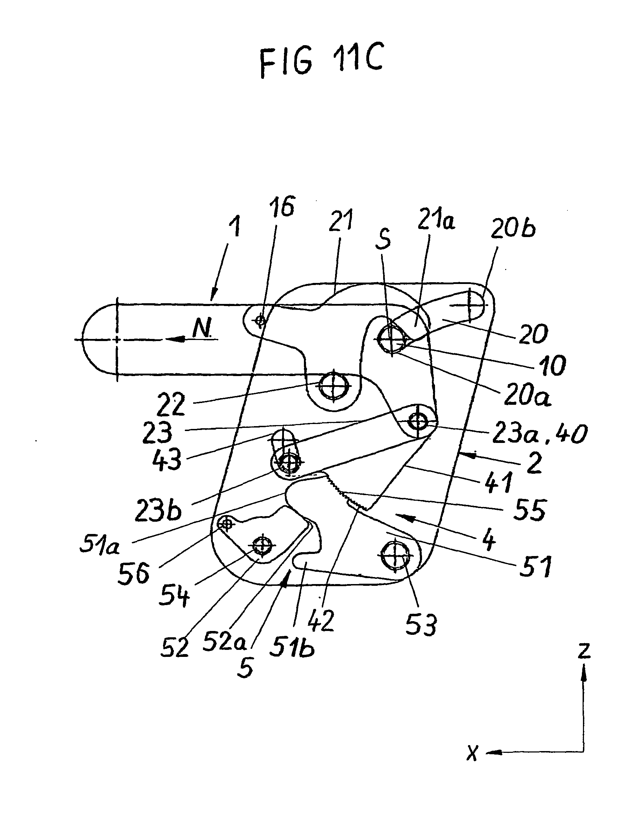

Die Figuren 11a bis 11 c zeigen jeweils die Anordnung aus Figur 10 nach dem Vorklappen der Rückenlehne auf die Sitzfläche, entsprechend einer im Wesentlichen horizontalen (waagerechten) Ausrichtung des Lehnenbeschlages 1. Die Figuren 11a bis 11c unterscheiden sich dabei in der Einstellung der Neigung des Lehnenbeschlages 1 (und damit der Rückenlehne) vor dem Vorklappen in die horizontale Position. Diese unterschiedlichen Einstellungen sind anhand der unterschiedlichen Winkellage der Verstellschwinge 41 in den Figuren 11a, 11b und 11c erkennbar.

Die in Figur 11a gezeigte (und mittels der Verriegelungseinrichtung 5 fixierte) Einstellung der Verstellschwinge 41 entspricht einer sehr starken Neigung des Lehnenbeschlages 1 nach hinten in seiner Gebrauchsposition. Die in Figur 11b dargestellte Einstellung der Verstellschwinge 41 entspricht einer mittleren Neigung des Lehnenbeschlages 1 nach hinten in seiner Gebrauchsposition, und zwar genau derjenigen Neigung N des Lehnenbeschlages 1 in seiner Gebrauchsposition, wie sie in Figur 10 dargestellt ist. Denn in Figur 10 befindet sich die Verstellschwinge in derselben Winkellage wie in Figur 11 b. Figur 11c schließlich zeigt einen vorgeklappten Lehnenbeschlag 1, der vor dem Vorklappen nahezu vertikal, d. h. parallel zur vertikalen Fahrzeugachse, ausgerichtet war.

Anhand der Figuren 11a bis 11c wird deutlich, dass die durch die eine Anlenkstelle 23a des Koppelhebels 23 definierte Achse sowie die durch die Lagerstelle 40 der Verstellschwinge 41 definierte Achse in allen drei Fällen zur Deckung gebracht sind, d.h., unabhängig davon, ob sich der Lehnenbeschlag 1 vor dem Vorklappen in einer sehr stark nach hinten geneigten Position befand (wie im Fall der Figur 11a) oder in einer Position mit mittlerer Neigung nach hinten (wie im Fall der Figur 11 b) oder in einer nahezu vertikalen Ausrichtung mit allenfalls geringer Neigung (wie in Figur 11 c). In allen drei Fällen hat die eine, obere Anlenkstelle 23a des Koppelhebels beim Vorklappen der Rückenlehne am Ende eine Position eingenommen, in der sie (auf der anderen Seite der Tragplatte 2) unter der Lagerstelle 40 der Verstellschwinge 41 positioniert ist. Dies wird dadurch erreicht, dass die besagte Anlenkstelle 23a und die Lagerstelle 40 auf einer Kreisbahn mit einem definierten Radius R um die Schwenkachse S des Lehnenbeschlages 1 liegen und dass diese Schwenkachse S am Beginn und am Ende der Klappbewegung der Rückenlehne von einer Gebrauchsposition in ihre vorgeklappte Position jeweils an demselben Ende 20a der Führungsbahn 20, also an genau der gleichen Stelle an der Tragplatte 2, positioniert ist.

Mit der in Figur 10 dargestellten und anhand der Figuren 11a bis 11c näher erläuterten Anordnung wird somit erreicht, dass der Lehnenbeschlag 1 und damit die Rückenlehne R nach dem Vorklappen auf die Sitzfläche, unabhängig davon, welchen Neigungswinkel sie vor dem Vorklappen aufwiesen, jeweils im Wesentlichen horizontal in der gleichen Lage über der Sitzfläche des entsprechenden Fahrzeugsitzes positioniert sind. Es kann demnach also auch eine ursprünglich stark nach hinten geneigte Rückenlehne unmittelbar auf die Sitzfläche vorgeklappt werden, ohne dass die Rückenlehne zuvor in eine im Wesentlichen vertikale Gebrauchsposition überführt werden müsste.

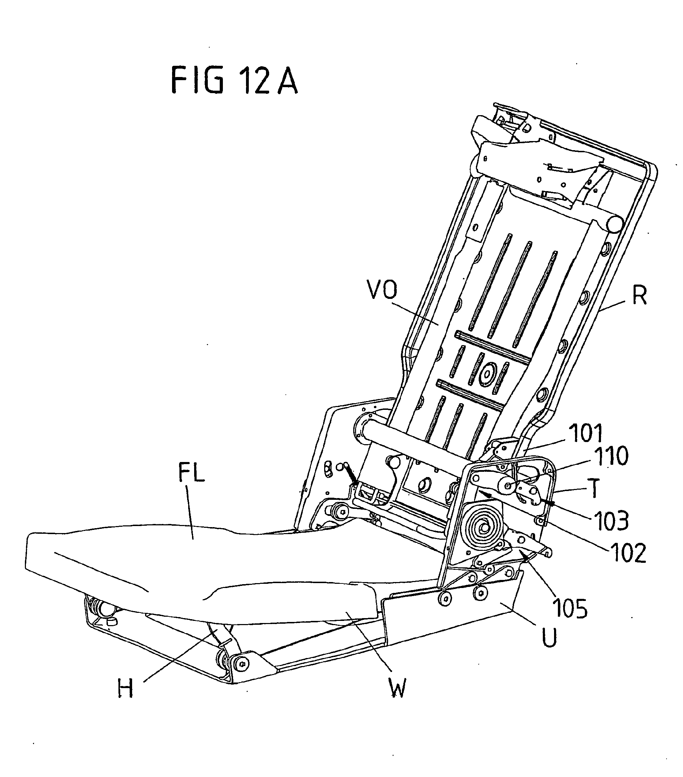

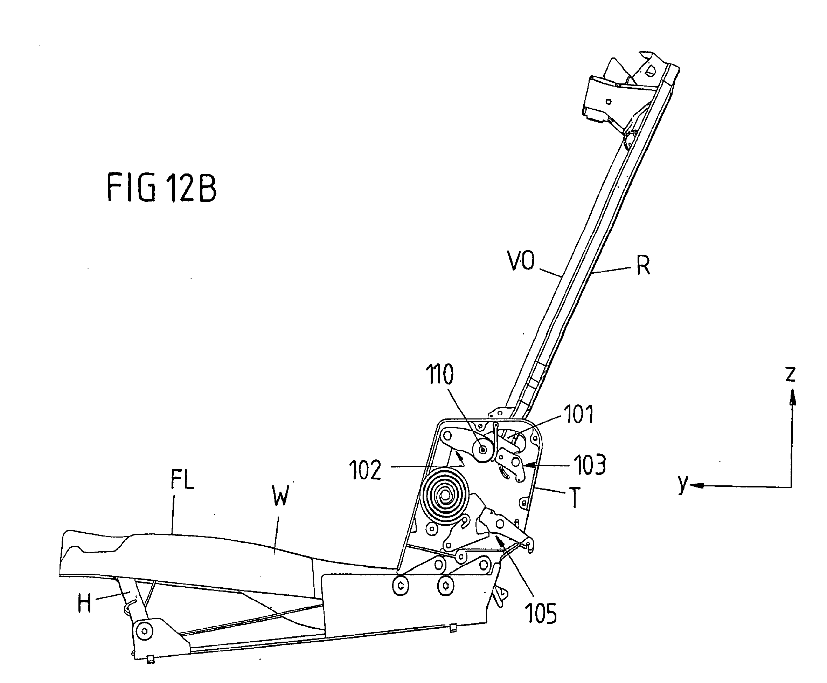

In den Figuren 12a und 12b ist ein Kraftfahrzeugsitz dargestellt, der ein Sitzuntergestell U umfasst, das einerseits eine mittels einer Einstellvorrichtung H höhen- und neigungsverstellbare Sitzwanne B trägt, die eine Sitzfläche FL für einen Sitzbenutzer definiert, und an dem andererseits eine Tragplatte T befestigt ist, an der verschwenkbar eine Rückenlehne R angelenkt ist, die eine zum Abstützen des Rückens eines Sitzbenutzers dienende Vorderseite VO aufweist. Dabei wird die eigentliche Sitzfläche des Kraftfah2eugsitzes nicht durch die Sitzwanne W gebildet, sondern vielmehr durch ein auf der Sitzwanne anzuordnendes Sitzpolster. Die jeweilige Höhen- und Neigungseinstellung der Sitzwanne W definiert dabei aber die Lage der Sitzfläche FL. In entsprechender Weise ist an der Rückenlehne R auf der Vorderseite VO ein Lehnenpolster anzuordnen, an das sich ein Sitzbenutzer mit seinem Rücken anlehnen kann.

Der in Figur 12a dargestellte Kraftfahrzeugsitz lässt sich einerseits in seiner Neigung bezüglich der vertikalen Fahrzeugachse z verstellen, so dass die Rückenlehne R eine Mehrzahl unterschiedlicher Gebrauchspositionen einnehmen kann, in denen sie jeweils zum Abstützen des Rückens eines Sitzbenutzers dient, jedoch jeweils eine unterschiedliche Neigung bezüglich einer vorgegebenen Vertikalen (beispielsweise der vertikalen Fahrzeugachse z bei einem in ein Kraftfahrzeug eingebauten Sitz) aufweist. Darüber hinaus lässt sich die Rückenlehne R auf die Sitzfläche FL des Kraftfahrzeugsitzes vorklappen, so dass oberhalb der Rückenlehne R zusätzlicher Transportraum zu Verfügung gestellt wird bzw. der Sitz im Rahmen einer so genannten Easy-Entry-Funktion in Fahrzeuglängsrichtung x nach vorne verschoben werden kann.

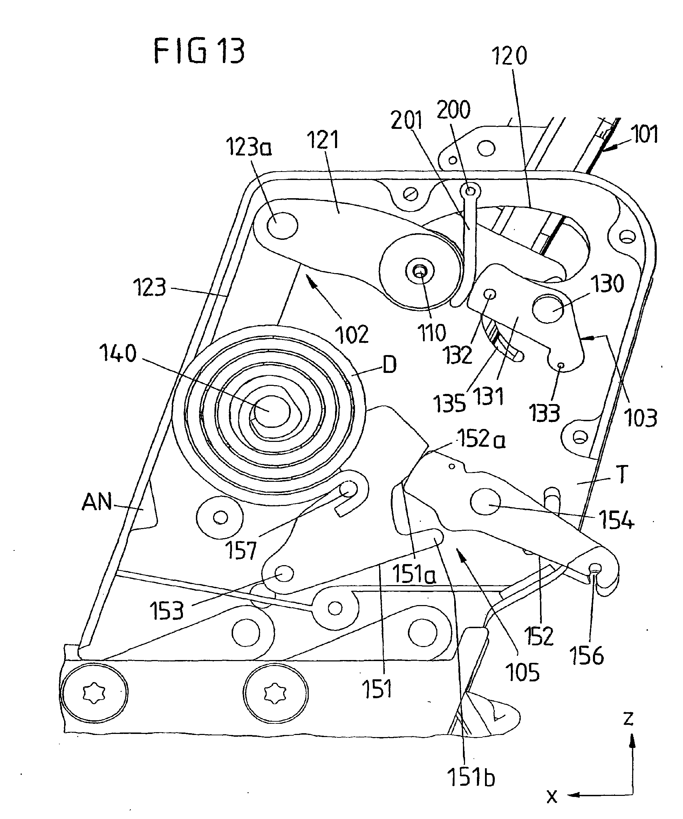

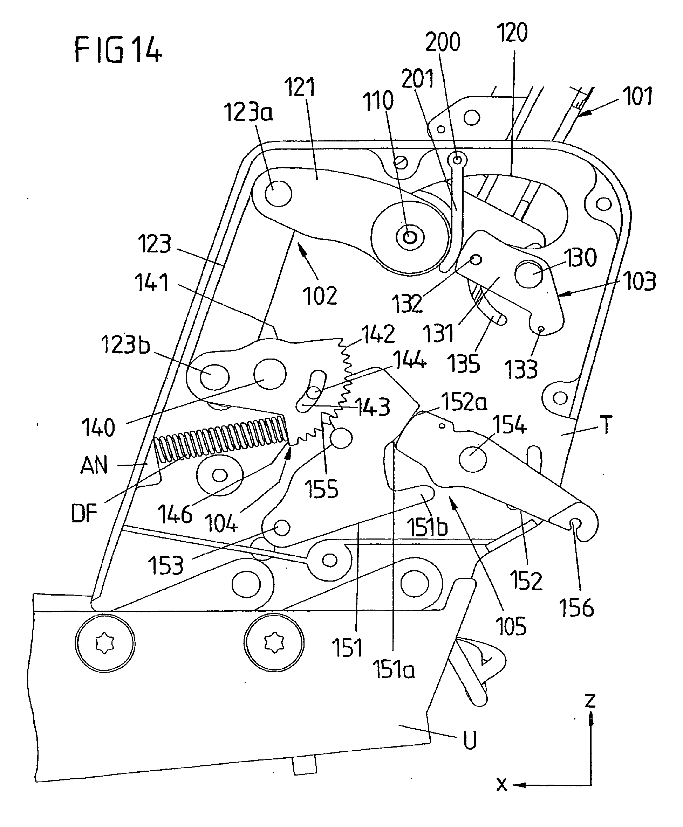

In den Figuren 13 und 14 sind zwei unterschiedliche Ausführungsformen der Mittel 1 bis 5 dargestellt, die die Neigungsverstellung der Rückenlehne R sowie deren Vorklappen auf die Sitzfläche FL ermöglichen, und die jeweils an der Tragplatte T angeordnet sind. Dabei zeigt Figur 13 eine Anordnung, wie sie auch am Lehnenbeschlag des Fahrzeugsitzes aus den Figuren 12a und 12b erkennbar ist und Figur 14 zeigt eine Abwandlung dieser Anordnung. Nachfolgend wird zunächst auf die Figur 14 dargestellte Anordnung eingegangen.

Figur 14 zeigt einen Lehnenbeschlag 101, der ein Bestandteil des Lehnengestells der in den Figuren 12a und 12b dargestellten Rückenlehne R eines Kraftfahrzeugsitzes bildet und der im Bereich seines entlang der vertikalen Fahrzeugachse z unteren Endes einer Schwenkachse in Form eines Lagerzapfens 110 aufweist, über den der Lehnenbeschlag 101 schwenkbar an einer Gestellbaugruppe T in Form einer Tragplatte des Sitzgestells gelagert ist. Der Lagerzapfen 110 des Lehnenbeschlages 101 ist in einer Führungskulisse 120 der Tragplatte T verschiebbar gelagert, so dass der Lagerzapfen 110 und damit die Schwenkachse des Lehnenbeschlages 101 durch Verschiebung entlang der Führungskulisse 120 zwischen den beiden Enden der Führungskulisse 120 bewegt werden können.

In dem in Figur 14 dargestellten Zustand wird eine solche Bewegung des Lagerzapfens 110 entlang der Führungskulisse 120 durch einen Hebelarm 131 eines an einer Lagerstelle 130 der Tragplatte T schwenkbar gelagerten Verriegelungshebels 103 verhindert, der über ein um eine Achse 200 verschwenkbares Zwischenglied 201 auf den Lagerzapfen 110 einwirkt und diesen im Bereich des ersten Endes in der Führungskulisse 120 fixiert. Hierdurch ist eine kombinierte Schwenk- und Verschiebebewegung des Lagerzapfens 110 in der Führungskulisse 120 unmöglich.

Der Verriegelungshebel 103 ist dabei vorzugsweise mittels eines elastischen Elementes, das an einem Angriffspunkt 133 des Verriegelungshebels 103 angreift, in Richtung auf den in Figur 14 dargestellten Zustand vorgespannt, indem er eine Verschiebung des Lagerzapfens 110 in der Führungskulisse 120 entgegenwirkt. Der Verriegelungshebel 103 wirkt dabei über das Zwischenglied 201 nicht unmittelbar auf den Lagerzapfen 110 ein, sondern vielmehr auf einen Hebel 121 einer Getriebeanordnung 102, 104, an dem der Lagerzapfen 110 aufgenommen ist. Die Funktion der Getriebeanordnung 102, 104 wird weiter unten noch erläutert werden.

Zur Freigabe des Lagerzapfens 110 in der Führungskulisse 120 muss der Verriegelungshebel 103 verschwenkt werden, so dass er nicht mehr auf das Zwischenglied 201 einwirkt. Bei einer solchen Schwenkbewegung wird der Verriegelungshebel 103 mit einem Stift 132 in einer Führungskulisse 135 der Tragplatte T geführt.

Der Schwenkhebel 121, in dem der Lagerzapfen 110 des Lehnenbeschlages 101 aufgenommen ist, ist über einen Koppelhebel 123 mit einem Zahnsegmenthebel 141 der Getriebeanordnung 102, 104 gekoppelt, der ein Getriebeelement 104 bildet, an dem eine Druckfeder DF angreift. Der Koppelhebel 123 ist hierzu an seinem einen, oberen Ende 123a mit dem Schwenkhebel 121 und mit seinem anderen, unteren Ende 123b mit dem Zahnsegmenthebel 141 gelenkverbunden. Der Zahnsegmenthebel 141 ist um eine an der Tragplatte T vorgesehene Lagerstelle 140 verschwenkbar und weist eine Außenverzahnung 142 auf, die mit einer Verriegelungseinrichtung 105 derart in Eingriff steht, dass eine Schwenkbewegung des Zahnsegmenthebels 141 in dem in Figur 14 gezeigten Zustand nicht möglich ist.

Der Zahnsegmenthebel 141 weist darüber hinaus eine Kulisse 143 auf, in die ein an der Tragplatte T vorgesehener Zapfen 144 eingreift und die somit der Begrenzung des möglichen Schwenkbereiches des Zahnsegmenthebels 141 dient.

Die dem Zahnsegmenthebel 141 zugeordnete Verriegelungseinrichtung 105 umfasst ein primäres Verriegelungselement 151, das als Verriegelungshebel um eine an der Tragplatte T vorgesehene Lagerstelle 153 verschwenkbar ist und das einen Verzahnungsbereich 155 aufweist, der in den Verzahnungsbereich 142 des Zahnsegmenthebels 141 eingreift, um diese zu arretieren. Dem primären Verriegelungselement 151 zugeordnet ist ein ebenfalls als Verriegelungshebel ausgebildetes, um eine weitere Lagerstelle 154 verschwenkbares Verriegelungselement 152, das mit einem Anschlag 152a an einem zugeordnete Anschlag 151 a des primären Verriegelungselementes 151 anliegt und dadurch eine Schwenkbewegung des primären Verriegelungselementes 151 verhindert, die die Verzahnung 142 des Zahnsegmenthebels 141 freigäbe.

An dem sekundären Verriegelungselement 152 ist eine Kraftangriffsstelle 156 vorgesehen, an der eine Kraft eingeleitet werden kann, die zu einem Verschwenken des sekundären Verriegelungselementes 152 führt, so dass die einander zugeordneten Anschläge 151a, 152a der beiden Verriegelungselemente 151, 152 außer Eingriff geraten. Für das Auslösen der entsprechenden Schwenkbewegung des sekundären Verriegelungselementes 152 können unterschiedliche physikalische bzw. technische Prinzipien verwendet werden, beispielsweise ein Aktor in Form eines Elektromagneten oder eines Elektromotors oder alternativ eine manuelle Betätigungseinrichtung usw..

Beim Verschwenken des sekundären Verriegelungselementes 152 wirkt dieses auf einen Fortsatz 151b des primären Verriegelungselementes 151 ein und bewirkt dadurch eine Schwenkbewegung des primären Verriegelungselementes 151 um die zugeordnete Schwenkachse (Lagerstelle 153), durch die dessen Verzahnung 155 mit der zugeordneten Verzahnung 142 des Zahnsegmenthebels 141 außer Eingriff gerät.

Auf den Zahnsegmenthebel 141 wirkt ferner eine Linearfeder DF in Form einer als Schraubenfeder ausgebildeten Druckfeder ein, die sich mit einem Ende an einem Anschlag AN der Tragplatte T und mit dem anderen Ende an einer Anschlagsfläche 146 des Zahnsegmenthebels 141 abstützt. Die Druckfeder DF hat die Tendenz den Zahnsegmenthebel 141 entgegen dem Uhrzeigersinn zu verschwenken, was aufgrund der Kopplung des Zahnsegmenthebels 141 über die beiden weiteren Hebel 121, 123 der Getriebeanordnung 102, 104 zu einer Schwenkbewegung des Lehnenbeschlages 101 ebenfalls entgegen dem Uhrzeigersinn führt, so dass die Rückenlehne R (vgl. Figuren 12a und 12b) die Tendenz hat, sich nach vorne zu neigen, also mit ihrer Vorderseite VO an den Rücken eines Sitzbenutzers zu legen. Die vorbeschriebene Bewegung des Zahnsegmenthebels 141 sowie des Lehnenbeschlages 101 (und damit der Rückenlehne R) wird jedoch in dem in Figur 14 dargestellten Zustand der Getriebeanordnung 102, 104 dadurch verhindert, dass die Verriegelungseinrichtung 105 sich im verriegelten Zustand befindet und daher eine Schwenkbewegung des Zahnsegmenthebels 141 verhindert.

Zur Verstellung der Neigung des Lehnenbeschlages 101 und damit der Rückenlehne R muss daher zunächst die Verriegelungseinrichtung 105 durch Einwirkung auf die Kraftangriffsstelle 156 des sekundären Verriegelungselementes 152 entriegelt werden, so dass die Verzahnung 155 des primären Verriegelungselementes 151 außer Eingriff mit der zugeordneten Verzahnung 142 des Zahnsegmenthebels 141 gerät und diesen nicht mehr arretiert. Sodann verschwenkt der Zahnsegmenthebel 141 unter der Wirkung der Druckfeder DF automatisch derart, dass er über die beiden weiteren Hebel 121, 123 der Getriebeanordnung 102, 104 eine Schwenkbewegung des Lehnenbeschlages 101 und damit der Rückenlehne insgesamt nach vorne, in Richtung auf den Rücken eines Sitzbenutzers bewirkt. Diese Schwenkbewegung kommt allerdings nur dann zustande, wenn der Sitzbenutzer nicht mit seinem Rücken an der Vorderseite VO der Rückenlehne R (vgl. Figuren 12a und 12b) anliegt. Im letztgenannten Fall würde die Schwenkbewegung durch die vom Sitzbenutzer auf die Vorderseite VO der Rückenlehne R ausgeübte Gegenkraft begrenzt bzw. verhindert.

Umgekehrt kann nach der Entriegelung der Verriegelungseinrichtung 105 und damit der Freigabe des Zahnsegmenthebels 141 auch ein Verschwenken der Rückenlehne R nach hinten ausgelöst werden, indem der Sitzbenutzer mit seinem Rücken gegen die Vorderseite VO der Rückenlehne R drückt, um diese nach hinten zu neigen. Dies führt zu einer Schwenkbewegung des Lehnenbeschlages 101 (zusammen mit der Rückenlehne R) im Uhrzeigersinn und hat - wegen der Kopplung des Zahnsegmenthebels 141 an den Lehnenbeschlag 101 über die Hebel 121, 123 - eine entsprechende Schwenkbewegung des Zahnsegmenthebels 141 im Uhrzeigersinn zur Folge. Diese Schwenkbewegung erfolgt entgegen der Druckkraft (Vorspannkraft) der Druckfeder DF. D.h., der Sitzbenutzer muss bei der Einwirkung auf die Vorderseite VO der Rückenlehne R dasjenige Moment überwinden, das durch die Einwirkung der Druckfeder DF auf den Zahnsegmenthebel 141 erzeugt wird. Dabei kann die Getriebeanordnung 141 in Form einer Hebelanordnung eine Übersetzung dieses Momentes bewirken, so dass das von der Druckfeder DF indirekt auf den Lehnenbeschlag 101 ausgeübte Drehmoment verschieden ist von dem durch die Druckfeder DF auf den Zahnsegmenthebel 141 ausgeübte Moment.

Zusätzlich kann in dem in Figur 14 gezeigten Zustand, in dem der Lehnenbeschlag 101 und damit die Rückenlehne des Sitzes in einer bestimmten Neigungsposition (mittels der Verriegelungseinrichtung 105) arretiert sind, ein Vorklappen der Rückenlehne R auf die Sitzfläche FL des in den Figuren 12a und 12b dargestellten Kraftfahrzeugsitzes ausgelöst werden, indem der mit einem Lehnenentriegelungsknopf gekoppelte Verriegelungshebel 103 durch Betätigung des Lehnenentriegelungsknopfes derart entgegen dem Uhrzeigersinn verschwenkt wird, dass er nicht mehr über das Zwischenglied 201 über den Schwenkhebel 121 einwirkt, an dem der Lagerzapfen 110 des Lehnenbeschlages 101 angeordnet ist. Nach dem Entriegeln des Lagerzapfens 110 und somit der Schwenkachse des Lehnenbeschlages 101 kann nun die Rückenlehne R zusammen mit dem Lehnenbeschlag 110 in Richtung auf die Sitzfläche F des Fahrzeugs vorgeklappt werden, indem die Rückenlehne R von einer Person ergriffen und zu der Sitzfläche FL hin umgeklappt wird. Bei dieser Klappbewegung der Rückenlehne R und des Lehnenbeschlages 101 bewegt sich der Lagerzapfen 110, der die jeweils momentane Schwenkachse des Lehnenbeschlages 101 beim Vorklappen definiert, in der Führungskulisse 120 zwischen deren beiden endseitigen Anschlägen. Die Bewegung des Lagerzapfens 110 in der Führungskulisse 120 wird dabei durch den Schwenkhebel 121 und den Koppelhebel 123 gesteuert, über die der Lehnenbeschlag 101 mit dem Zahnsegmenthebel 141 gekoppelt ist. Da der Zahnsegmenthebel 101 beim Vorklappen der Rückenlehne R bzw. des Lehnenbeschlages 101 mittels der zugeordneten Verriegelungseinrichtung 105 verriegelt ist, ist der Lehnenbeschlag 101 beim Vorklappen über Schwenkhebel 121 und den Koppelhebel 123 an ein gestellfestes (bezüglich der Tragplatte T nicht bewegliches) Element gekoppelt.

Insgesamt bewegt sich der Lagerzapfen 110 beim Vorklappen der Rückenlehne R ausgehend von dem in Figur 14 dargestellten Zustand zunächst von dem ersten Ende der Führungskulisse 120 zu deren anderem, zweiten Ende und dann wieder zurück zu dem ersten Ende. Bei komplett vorgeklapptem Lehnenbeschlag 141 und damit oberhalb der Sitzfläche FL liegender Rückenlehne R befindet sich somit der Lagerzapfen 110 wieder an derselben Stelle, wie bei Beginn der Klappbewegung (Figur 14) und kann dort mittels des Verriegelungshebels 103 arretiert werden.

Bei einem späteren, erneuten Hochklappen der Rückenlehne aus der auf die Sitzfläche FL vorgeklappten Lage in eine Gebrauchsposition, entsprechend einer im Wesentlichen aufrechten Lage mit einer - wie weiter vorne beschrieben - einstellbaren Neigung gegenüber der vertikalen Fahrzeugachse z, kommt es wiederum zu der vorstehend erläuterten Bewegung des Lagerzapfens 110 in der Führungskulisse 120 der Tragplatte T.

Von besonderer Bedeutung ist vorliegend, dass weder beim Vorklappen der Rückenlehne noch bei einem späteren Zurückklappen der Rückenlehne in eine Gebrauchsposition die an dem Zahnsegmenthebel 141 angreifende Druckfeder DF auf den Lehnenbeschlag 101 (und damit die Rückenlehne R) einwirkt. Denn der Zahnsegmenthebel 141 ist bei dieser Klappbewegung mittels der Verriegelungseinrichtung 105 arretiert und wirkt als ein gestellfestes Element der Tragplatte T. Der Schwenkhebel 121 und der Koppelhebel 123 der Hebelanordnung 102, 104 sind dabei derart ausgebildet, dass sie bei einem Vorklappen des Lehnenbeschlages 101 und damit einer entsprechenden Schwenkbewegung des am Schwenkhebel 121 angeordneten Lagerzapfens 110 gerade die gewünschte Hin- und Herbewegung des Lagerzapfens 110 in der Führungskulisse 120 bewirken. Die beiden Hebel 121, 123 gleichen also die Schwenkbewegung der Rückenlehne R und damit des Lehnenbeschlages 101 im Zusammenspiel mit der Führungskulisse 120 derart aus, dass diese Klappbewegung bei verriegeltem Zahnsegmenthebel 141 durchgeführt werden kann.

Beim Vorklappen der Rückenlehne R auf die Sitzfläche FL sowie einem späteren Zurückklappen der Rückenlehne R in eine Gebrauchsposition, in der sie zum Abstützen des Rückens eines Fahrzeuginsassen dienen kann, sind somit Rückenlehne R und Lehnenbeschlag 101 insofern von der Druckfeder DF entkoppelt, als diese Feder die Klappbewegung in keiner Weise beeinflusst. Dies wird dadurch ermöglicht, dass die Klappbewegung bei arretiertem Zahnsegmenthebel 141 erfolgt, wobei der Lagerzapfen 110 in der Führungskulisse 120 unter Steuerung durch den Schwenkhebel 121 und den Koppelhebel 123 die erforderliche Ausgleichsbewegung (Kompensationsbewegung) durchführt, die ein Verschwenken des Lehnenbeschlags 101 bei verriegeltem Zahnsegmenthebel 141 zulässt.

Figur 13 zeigt eine Abwandlung der Anordnung aus Figur 14, wobei der Unterschied darin besteht, dass die Linearfeder DF in Form einer Druckfeder durch eine Drehfeder D in Form einer Spiralfeder ersetzt ist, die einerseits an der Lagerstelle 140 des Zahnsegmenthebels 141 und andererseits am Deckel der Tragplatte T mittels eines Bolzens 157 angreift.

Die Drehfeder D hat bei der in Figur 13 dargestellten Anordnung dieselbe Funktion wie die Linearfeder DF in Figur 14 dargestellt. Sie spannt den Zahnsegmenthebel 141 im Uhrzeigersinn vor, so dass dieser die Tendenz hat, den Lehnenbeschlag 101 und damit die Rückenlehne R (vgl. Figuren 12a und 12b) entgegen dem Uhrzeigersinn nach vorne zu verschwenken, wenn der Zahnsegmenthebel 141 nicht mittels der Verriegelungsvorrichtung 105 verriegelt ist. Ein Verschwenken der Rückenlehne R nach hinten muss daher entgegen der Vorspannkraft der Drehfeder D erfolgen.

Im Übrigen stimmt das in Figur 13 dargestellte Ausführungsbeispiel mit dem anhand Figur 14 erläuterten überein.

## Patentansprüche

1. Sitzanordnung für einen Kraftfahrzeugsitz mit
- einem Sitzuntergestell, das eine Sitzfläche (F) für einen Kraftfahrzeuginsassen definiert, und
- einer schwenkbar gelagerten Rückenlehne (R) die um eine Schwenkachse (S) auf die Sitzfläche (F) klappar ist,
**dadurch gekennzeichnet,**
**dass** die Schwenkachse (S) beim Vorklappen der Rückenlehne (R) auf die Sitzfläche (F) entlang einer vorgegebenen Bahn bewegt wird.

2. Sitzanordnung nach Anspruch 1, **dadurch gekennzeichnet, dass** die Schwenkachse (S) durch eine körperliche Baugruppe (10, 20) der Sitzanordnung gebildet wird.

3. Sitzanordnung nach Anspruch 1 oder 2, **dadurch gekennzeichnet, dass** die Schwenkachse (S) durch eine Lagerachse (10) gebildet wird, über die die Rückenlehne (R) an einer Gestellbaugruppe (2) gelagert ist.

4. Sitzanordnung nach einem der vorhergehenden Ansprüche, **dadurch gekennzeichnet, dass** die Schwenkachse (S) beim Vorklappen der Rückenlehne (R) entlang der vorgegebenen Bahn zwangsgeführt ist.

5. Sitzanordnung nach Anspruch 4, **dadurch gekennzeichnet, dass** die Schwenkachse (S) mittels einer Führungseinrichtung (20) zwangsgeführt ist, die sich entlang der vorgegebenen Bahn erstreckt.

6. Sitzanordnung nach Anspruch 5, **dadurch gekennzeichnet, dass** die Führungseinrichtung (20) durch eine Führungskulisse gebildet wird.

7. Sitzanordnung nach Anspruch 4, **dadurch gekennzeichnet, dass** die Schwenkachse (S) mittels eines Führungselementes (27) zwangsgeführt ist, über das die Schwenkachse (S) mit einer Gestellbaugruppe (2) verbunden ist und das beim Vorklappen der Rückenlehne (R) bewegt wird.

8. Sitzanordnung nach Anspruch 7, **dadurch gekennzeichnet, dass** das Führungselement (27) längserstreckt ausgebildet ist.

9. Sitzanordnung nach Anspruch 7 oder 8, **dadurch gekennzeichnet, dass** das Führungselement (27) durch einen Führungshebel gebildet wird.

10. Sitzanordnung nach einem der vorhergehenden Ansprüche, **dadurch gekennzeichnet, dass** die. Rückenlehne (R) zusätzlich außerhalb der Schwenkachse (S) mit einer Gestellbaugruppe (2) gelenkig in Verbindung steht.

11. Sitzanordnung nach Anspruch 10, **dadurch gekennzeichnet, dass** die Rückenlehne (R) außerhalb der Schwenkachse (S) mit der Gestellbaugruppe (2) über ein Koppelelement (23) verbunden ist, das sich von der Rückenlehne (R) zu der Gestellbaugruppe (2) erstreckt und beim Vorklappen der Rückenlehne (R) bewegt wird.

12. Sitzanordnung nach Anspruch 11, **dadurch gekennzeichnet, dass** das Koppelelement (23) durch einen Koppelhebel gebildet wird.

13. Sitzanordnung nach Anspruch 10, **dadurch gekennzeichnet, dass** die Rückenlehne (R) außerhalb der Schwenkachse (S) mit der Gestellbaugruppe (2) über eine Führungseinrichtung (25) verbunden ist, die einen Abschnitt (16) der Rückenlehne (R) beim Vorklappen führt.

14. Sitzanordnung nach Anspruch 13, **dadurch gekennzeichnet, dass** die Führungseinrichtung (25) durch eine Führungskulisse gebildet wird.

15. Sitzanordnung nach einem der Ansprüche 10 bis 14, **dadurch gekennzeichnet, dass** die Bewegung der Schwenkachse (S) entlang der vorgegebenen Bahn beim Vorklappen der Rückenlehne (R) durch das Zusammenwirken der Rückenlehne (R) mit der Gestellbaugruppe (2) außerhalb der Schwenkachse (S) gesteuert wird.

16. Sitzanordnung nach einem der Ansprüche 10 bis 15, **dadurch gekennzeichnet, dass** die Schwenkachse (S) entlang der vorgegebenen Bahn mittels einer entlang dieser Bahn erstreckten Führungseinrichtung (20) oder mittels eines Führungselementes (27) zwangsgeführt ist, über das die Schwenkachse (S) mit der Gestellbaugruppe (2) verbunden ist, und dass die Bewegung der Schwenkachse (S) entlang der vorgegebenen Bahn mittels eines Koppelelementes (23) oder mittels einer Führungseinrichtung (25) gesteuert wird, mittels dem bzw. mittels der die Rückenlehne (R) außerhalb der Schwenkachse (S) mit der Gestellbaugruppe (2) verbunden ist.

17. Sitzanordnung nach einem der vorhergehenden Ansprüche, **dadurch gekennzeichnet, dass** die Schwenkachse (S) beim Vorklappen der Rückenlehne (R) auf einer geschlossenen Bahn bewegt wird.

18. Sitzanordnung nach Anspruch 17, **dadurch gekennzeichnet, dass** die Schwenkachse (S) beim Vorklappen der Rückenlehne (R) von einem Ende (20a) zu einem anderen Ende (20b) einer offenen Bahnkurve und zurück zum einen Ende (20a) der Bahnkurve bewegt wird.

19. Sitzanordnung nach einem der vorhergehenden Ansprüche, **dadurch gekennzeichnet, dass** die Schwenkachse (S) beim Vorklappen der Rückenlehne (R) zumindest während eines Teiles der Klappbewegung entlang einer Richtung bewegt wird, die der Richtung der Klappbewegung im wesentlichen entgegengesetzt ist.

20. Sitzanordnung nach einem der vorhergehenden Ansprüche, **gekennzeichnet durch** Mittel (21, 21 a) zur Verriegelung der Schwenkachse (S) in einer Position, die einer in Gebrauchsposition hochgeklappten Rückenlehne (R) entspricht, und/oder in einer Position, die einer auf die Sitzfläche (F) vorgeklappten Rückenlehne (R) entspricht.

21. Sitzanordnung nach Anspruch 20, **dadurch gekennzeichnet, dass** die Mittel (21, 21a) zur Verriegelung der Schwenkachse (S) einen Verriegelungshebel (21) umfassen.

22. Sitzanordnung nach einem der vorhergehenden Ansprüche, **dadurch gekennzeichnet, dass** eine Verstelleinrichtung (4) vorgesehen ist, mittels der die Neigung der hochgeklappten Rückenlehne (R) zwischen verschiedenen Gebrauchspositionen einstellbar ist.

23. Sitzanordnung nach Anspruch 22, **gekennzeichnet durch** eine Verriegelungseinrichtung (5) zur Verriegelung einer zuvor eingestellten Neigung der Rückenlehne (R).

24. Sitzanordnung nach Anspruch 23, **dadurch gekennzeichnet, dass** die Verriegelungseinrichtung durch die selbsthemmende Auslegung der Verstelleinrichtung (4) oder durch eine der Verstelleinrichtung (4) zugeordnete Bremse gebildet wird.

25. Sitzanordnung nach Anspruch 23, **dadurch gekennzeichnet, dass** eine separate Verriegelungseinrichtung (5) vorgesehen ist, die mit der Verstelleinrichtung (4) zusammenwirkt.

26. Sitzanordnung nach Anspruch 25, **dadurch gekennzeichnet, dass** die Verriegelungseinrichtung (5) ein primäres Verriegelungselement (51) umfasst, das zur Verriegelung der Verstelleinrichtung (4) auf diese einwirkt, sowie ein sekundäres Verriegelungselement (52), mit dem das primäre Verriegelungselement (51) in einer Position verriegelbar ist, in der es auf die Verstelleinrichtung (4) einwirkt.

27. Sitzanordnung nach Anspruch 26, **dadurch gekennzeichnet, dass** das sekundäre Verriegelungselement (52) das primäre Verriegelungselement (51) mit der Verstelleinrichtung (4) außer Eingriff bringt, um die Neigung der Rückenlehne verändern zu können.

28. Sitzanordnung nach einem der vorhergehenden Ansprüche, **gekennzeichnet durch**
- eine in ihrer Neigung einstellbare, schwenkbar gelagerte Rückenlehne (R), die eine zum Abstützen des Rückens eines Sitzbenutzers dienende Vorderseite (VO) aufweist, und
- eine Federanordnung (D, DF) mit mindestens einem elastischen Element, mit dem die Rückenlehne (R) derart elastisch vorgespannt ist, dass sie die Tendenz hat, nach vorne zu schwenken und sich mit ihrer Vorderseite (VO) an den Rücken des Sitzbenutzers anzulegen,
wobei die Neigung der Rückenlehne (R) **durch** Krafteinwirkung auf deren Vorderseite (VO) entgegen der Wirkung der Federanordnung (D, DF) verstellbar ist und wobei die Federanordnung (D, DF) an einem Getriebeelement (104) angreift, das mit der Rückenlehne (R) gekoppelt ist und dem eine Verriegelungseinrichtung (105) zugeordnet ist, mit der das Getriebeelement (104) in unterschiedlichen Lagen verriegelbar ist.

29. Sitzanordnung nach Anspruch 28, **dadurch gekennzeichnet, dass** die Rückenlehne im verriegelten Zustand der Verriegelungseinrichtung (105) in ihrer jeweiligen Neigungsposition arretiert ist.

30. Sitzanordnung nach Anspruch 28 oder 29, **dadurch gekennzeichnet, dass** die Neigung der Rückenlehne (R) im entriegelten Zustand der Verriegelungseinrichtung (105) verstellbar ist.

31. Sitzanordnung nach Anspruch 30, **dadurch gekennzeichnet, dass** die Rückenlehne (R) unter Einwirkung der Federanordnung (D, DF) auf das Getriebeelement (104) nach vorne verschwenkt werden kann.

32. Sitzanordnung nach Anspruch 30 oder 31, **dadurch gekennzeichnet, dass** die Rückenlehne (R) unter der Einwirkung einer Druckkraft auf deren Vorderseite (VO) entgegen der Wirkung der Federanordnung (D, DF) nach hinten verschwenkt werden kann.

33. Sitzanordnung nach einem der Ansprüche 28 bis 32, **dadurch gekennzeichnet, dass** das Getriebeelement (104) Bestandteil einer Getriebeanordnung (102, 104), insbesondere einer Hebelanordnung, ist, über die die Federanordnung (D, DF) mit der Rückenlehne (R) gekoppelt ist.

34. Sitzanordnung nach Anspruch 33, **dadurch gekennzeichnet, dass** die Getriebeanordnung (102, 104) zur Übersetzung eines von der Federanordnung (D, DF) auf das Getriebeelement (104) ausgeübten Drehmomentes dient.

35. Sitzanordnung nach einem der Ansprüche 28 bis 34, **dadurch gekennzeichnet, dass** dem Getriebeelement (104) eine Kupplung (120, 121) zugeordnet ist, mittels der die Rückenlehne (R) von dem Getriebeelement (104) derart entkoppelbar ist, dass die Rückenlehne (R) in Richtung auf die Sitzfläche (FL) des Kraftfahrzeugsitzes vorklappbar ist, ohne dass das Getriebeelement (104) bewegt wird.

36. Sitzanordnung nach Anspruch 35, **dadurch gekennzeichnet, dass** die Rückenlehne (R) bei Entkopplung von dem Getriebeelement (104) von der Federanordnung (D, DF) entkoppelt ist, so dass diese nicht auf die Rückenlehne (R) einwirkt.

37. Sitzanordnung nach einem der Ansprüche 28 bis 36, **dadurch gekennzeichnet, dass** dem Getriebeelement (104) eine Kupplung (120, 121) zugeordnet ist, mittels der die Rückenlehne (R) von dem Getriebeelement (104) derart entkoppelbar ist, dass die Rückenlehne (R) in Richtung auf die Sitzfläche vorklappbar ist, wenn das Getriebeelement (104) mittels einer Verriegelungseinrichtung (105) verriegelt ist.

38. Sitzanordnung nach einem der Ansprüche 28 bis 37, **dadurch gekennzeichnet, dass** die Schwenkachse der Rückenlehne (R) zur Entkopplung der Rückenlehne (R) von dem Getriebeelement (104) beim Vorklappen der Rückenlehne (R) entlang einer vorgegebenen Bahn (120) bewegt wird, welche vorzugsweise derart ausgebildet ist, dass durch die Bewegung der Schwenkachse entlang der Bahn (120) eine Rückwirkung der Schwenkbewegung der Rückenlehne (R) auf das Getriebeelement (104) verhindert wird.

39. Sitzanordnung nach Anspruch 38, **dadurch gekennzeichnet, dass** die Bahn (120) durch eine Führungseinrichtung gebildet wird, in der die Schwenkachse linksbeweglich geführt wird.

40. Sitzanordnung nach einem der Ansprüche 35 bis 37, **dadurch gekennzeichnet, dass** das Getriebeelement (104) mit der Rückenlehne (R) außer Eingriff bringbar ist, so dass das Getriebeelement (104) nicht mit der Rückenlehne (R) in Verbindung steht.

41. Sitzanordnung nach einem der Ansprüche 39 bis 40, **dadurch gekennzeichnet, dass** Sperrmittel (103) vorgesehen sind, mittels der die Kupplung (120, 121) in einem Zustand verriegelbar ist, in der das Getriebeelement (104) mit der Rückenlehne (R) gekoppelt ist.

42. Sitzanordnung nach einem der Ansprüche 39 bis 41, **dadurch gekennzeichnet, dass** Sperrmittel (103) vorgesehen sind, mittels der die Kupplung (120, 121) in einem Zustand verriegelbar ist, in der das Getriebeelement (104) von der Rückenlehne (R) entkoppelt ist.

43. Sitzanordnung nach Anspruch 38 oder 39 und Anspruch 41 oder 42, **dadurch gekennzeichnet, dass** die Sperrmittel (103) an der Schwenkachse der Rückenlehne (R) angreifen und deren Bewegung entlang der Bahn (120) verhindern.

44. Sitzanordnung nach Anspruch 43, **dadurch gekennzeichnet, dass** die Sperrmittel (103) durch einen Hebel gebildet werden.

45. Sitzanordnung nach einem der Ansprüche 28 bis 44, **dadurch gekennzeichnet, dass** die Verriegelungseinrichtung (105) des Getriebeelementes (104) ein primäres Verriegelungselement (151) und ein sekundäres Verriegelungselement (152) aufweist, wobei das primäre Verriegelungselement (151) im verriegelten Zustand an dem Getriebeelement (104) angreift und das sekundäre Verriegelungselement (152) das primäre Verriegelungselement (151) im verriegelten Zustand blockiert.

46. Sitzanordnung nach einem der Ansprüche 28 bis 45, **dadurch gekennzeichnet, dass** das Getriebeelement (104) durch einen Zahnsegmenthebel (141) gebildet wird.

47. Sitzanordnung nach einem der Ansprüche 28 bis 46, **dadurch gekennzeichnet, dass** die Federanordnung (D, DF) ein Federelement aufweist, das an dem Getriebeelement (104) angreift.

48. Sitzanordnung nach einem der Ansprüche 28 bis 47, **dadurch gekennzeichnet, dass** das Getriebeelement (104) über eine Verzahnung (142) mit der Verriegelungseinrichtung (105) in Eingriff bringbar ist.

## Claims

1. A seat assembly for a motor vehicle seat, having
- a seat frame which defines a seat surface (F) for a motor vehicle occupant, and
- a pivotably mounted backrest (R) which can be folded about a pivot axis (S) onto the seat surface (F),
**characterized**
**in that** the pivot axis (S) is moved along a predetermined path when the backrest (R) is folded forward onto the seat surface (F).

2. The seat assembly as claimed in claim 1, **characterized in that** the pivot axis (S) is formed by a physical subassembly (10, 20) of the seat assembly.

3. The seat assembly as claimed in claim 1 or 2, **characterized in that** the pivot axis (S) is formed by a bearing spindle (10) via which the backrest (R) is mounted on a frame subassembly (2).

4. The seat assembly as claimed in one of the preceding claims, **characterized in that** the pivot axis (S) is positively guided along the predetermined path when the backrest (R) is folded forward.

5. The seat assembly as claimed in claim 4, **characterized in that** the pivot axis (S) is positively guided by means of a guide device (20) which extends along the predetermined path.

6. The seat assembly as claimed in claim 5, **characterized in that** the guide device (20) is formed by a guide slot.

7. The seat assembly as claimed in claim 4, **characterized in that** the pivot axis (S) is positively guided by means of a guide element (27) via which the pivot axis (S) is connected to a frame subassembly (2) and which is moved when the backrest (R) is folded forward.

8. The seat assembly as claimed in claim 7, **characterized in that** the guide element (27) is of longitudinally stretched-out design.

9. The seat assembly as claimed in claim 7 or 8, **characterized in that** the guide element (27) is formed by a guide lever.

10. The seat assembly as claimed in one of the preceding claims, **characterized in that** the backrest (R) is additionally connected outside the pivot axis (S) to a frame subassembly (2) in an articulated manner.

11. The seat assembly as claimed in claim 10, **characterized in that** the backrest (R) is connected outside the pivot axis (S) to the frame subassembly (2) via a coupling element (23) which extends from the backrest (R) to the frame subassembly (2) and is moved when the backrest (R) is folded forward.

12. The seat assembly as claimed in claim 11, **characterized in that** the coupling element (23) is formed by a coupling lever.

13. The seat assembly as claimed in claim 10,
**characterized in that** the backrest (R) is connected outside the pivot axis (S) to the frame subassembly (2) via a guide device (25) which guides a section (16) of the backrest (R) when it is folded forward.

14. The seat assembly as claimed in claim 13, **characterized in that** the guide device (25) is formed by a guide slot.

15. The seat assembly as claimed in one of claims 10 to 14, **characterized in that** the movement of the pivot axis (S) along the predetermined path when the backrest (R) is folded forward is controlled by the interaction of the backrest (R) with the frame subassembly (2) outside the pivot axis (S).

16. The seat assembly as claimed in one of claims 10 to 15, **characterized in that** the pivot axis (S) is positively guided along the predetermined path by means of a guide device (20) stretched out along this path or by means of a guide element (27) via which the pivot axis (S) is connected to the frame subassembly (2), and **in that** the movement of the pivot axis (S) along the predetermined path is controlled by means of a coupling element (23) or by means of a guide device (25), by means of which element or by means of which device the backrest (R) is connected outside the pivot axis (S) to the frame subassembly (2).

17. The seat assembly as claimed in one of the preceding claims, **characterized in that** the pivot axis (S) is moved on a closed path when the backrest (R) is folded forward.

18. The seat assembly as claimed in claim 17, **characterized in that** the pivot axis (S) is moved from one end (20a) to another end (20b) of an open curved path and back to the first end (20a) of the curved path when the backrest (R) is folded forward.

19. The seat assembly as claimed in one of the preceding claims, **characterized in that**, when the backrest (R) is folded forward, the pivot axis (S) is moved, at least during part of the folding movement, along a direction which is essentially opposed to the direction of the folding movement.

20. The seat assembly as claimed in one of the preceding claims, **characterized by** means (21, 21a) for locking the pivot axis (S) in a position which corresponds to a backrest (R) swung up into a use position, and/or in a position which corresponds to a backrest (R) folded forward onto the seat surface (F).

21. The seat assembly as claimed in claim 20, **characterized in that** the means (21, 21a) for locking the pivot axis (S) comprise a locking lever (21).

22. The seat assembly as claimed in one of the preceding claims, **characterized in that** an adjusting device (4), by means of which the inclination of the swung-up backrest (R) can be adjusted between various use positions, is provided.

23. The seat assembly as claimed in claim 22, **characterized by** a locking device (5) for locking a previously set inclination of the backrest (R).

24. The seat assembly as claimed in claim 23, **characterized in that** the locking device is formed by the self-locking configuration of the adjusting device (4) or by a brake assigned to the adjusting device (4).

25. The seat assembly as claimed in claim 23,
**characterized in that** a separate locking device (5), which interacts with the adjusting device (4), is provided.

26. The seat assembly as claimed in claim 25, **characterized in that** the locking device (5) comprises a primary locking element (51) which acts on the adjusting device (4) to lock the latter, and a secondary locking element (52) with which the primary locking element (51) can be locked in a position in which it acts on the adjusting device (4).

27. The seat assembly as claimed in claim 26, **characterized in that** the secondary locking element (52) disengages the primary locking element (51) from the adjusting device (4) in order to be able to change the inclination of the backrest.

28. The seat assembly as claimed in one of the preceding claims, **characterized by**
- a pivotably mounted backrest (R) which can be adjusted in its inclination and has a front side (VO) serving to support a seat user's back, and
- a spring arrangement (D, DF) having at least one elastic element with which the backrest (R) is prestressed elastically in such a manner that it has the tendency to pivot forward and lean with its front side (VO) against the seat user's back,
it being possible for the inclination of the backrest (R) to be adjusted counter to the action of the spring arrangement (D, DF) by the application of force to its front side (VO), and the spring arrangement (D, DF) acting on a gear element (104) which is coupled to the backrest (R) and which is assigned a locking device (105) with which the gear element (104) can be locked in different positions.

29. The seat assembly as claimed in claim 28, **characterized in that**, in the locked state of the locking device (105), the backrest is locked in its particular position of inclination.

30. The seat assembly as claimed in claim 28 or 29, **characterized in that**, in the unlocked state of the locking device (105), the inclination of the backrest (R) can be adjusted.

31. The seat assembly as claimed in claim 30, **characterized in that** the backrest (R) can be pivoted forward onto the gear element (104) under the action of the spring arrangement (D, DF).

32. The seat assembly as claimed in claim 30 or 31, **characterized in that** the backrest (R) can be pivoted rearward counter to the action of the spring arrangement (D, DF) under the action of a compressive force on its front side (VO).

33. The seat assembly as claimed in one of claims 28 to 32, **characterized in that** the gear element (104) is part of a gear arrangement (102, 104), in particular a lever arrangement, via which the spring arrangement (D, DF) is coupled to the backrest (R).

34. The seat assembly as claimed in claim 33, **characterized in that** the gear arrangement (102, 104) serves for transmitting a torque exerted on the gear element (104) by the spring arrangement (D, DF).

35. The seat assembly as claimed in one of claims 28 to 34, **characterized in that** the gear element (104) is assigned a coupling (120, 121) by means of which the backrest (R) can be decoupled from the gear element (104) in such a manner that the backrest (R) can be folded forward in the direction of the seat surface (FL) of the motor vehicle seat without the gear element (104) being moved.

36. The seat assembly as claimed in claim 35, **characterized in that** the backrest (R), when it is decoupled from the gear element (104), is decoupled from the spring arrangement (D, DF), so that the latter does not act on the backrest (R).

37. The seat assembly as claimed in one of claims 28 to 36, **characterized in that** the gear element (104) is assigned a coupling (120, 121) by means of which the backrest (R) can be decoupled from the gear element (104) in such a manner that the backrest (R) can be folded forward in the direction of the seat surface when the gear element (104) is locked by means of a locking device (105).

38. The seat assembly as claimed in one of claims 28 to 37, **characterized in that**, in order to decouple the backrest (R) from the gear element (104), the pivot axis of the backrest (R), when the backrest (R) is folded forward, is moved along a predetermined path (120) which is preferably designed in such a manner that the movement of the pivot axis along the path (120) prevents a reaction of the pivoting movement of the backrest (R) on the gear element (104).

39. The seat assembly as claimed in claim 38, **characterized in that** the path (120) is formed by a guide device in which the pivot axis is guided in a manner moveable to the left.

40. The seat assembly as claimed in one of claims 35 to 37, **characterized in that** the gear element (104) can be disengaged from the backrest (R), so that the gear element (104) is not connected to the backrest (R).

41. The seat assembly as claimed in either of claims 39 and 40, **characterized in that** locking means (103) are provided by means of which the coupling (120, 121) can be locked in a state in which the gear element (104) is coupled to the backrest (R).

42. The seat assembly as claimed in one of claims 39 to 41, **characterized in that** locking means (103) are provided by means of which the coupling (120, 121) can be locked in a state in which the gear element (104) is decoupled from the backrest (R).

43. The seat assembly as claimed in claim 38 or 39 and 41 or 42, **characterized in that** the blocking means (103) act on the pivot axis of the backrest (R) and prevent the movement thereof along the path (120).

44. The seat assembly as claimed in claim 43, **characterized in that** the blocking means (103) are formed by a lever.

45. The seat assembly as claimed in one of claims 28 to 44, **characterized in that** the locking device (105) of the gear element (104) has a primary locking element (151) and a secondary locking element (152), the primary locking element (151), in the locked state, acting on the gear element (104) and the secondary locking element (152) blocking the primary locking element (151) in the locked state.

46. The seat assembly as claimed in one of claims 28 to 45, **characterized in that** the gear element (104) is formed by a toothed segment lever (141).

47. The seat assembly as claimed in one of claims 28 to 46, **characterized in that** the spring arrangement (D, DF) has a spring element which acts on the gear element (104).

48. The seat assembly as claimed in one of claims 28 to 47, **characterized in that** the gear element (104) can be brought into engagement with the locking device (105) via a toothing (142).

## Revendications

1. Ensemble formant siège pour un véhicule automobile, comprenant :
- un châssis d'assise, qui définit une surface d'assise (F) pour un occupant du véhicule, et
- un dossier (R) monté en pivotement, susceptible d'être rabattu sur la surface d'assise (F) autour d'un axe de pivotement (S),
**caractérisé en ce que**
l'axe de pivotement (S) est déplacé le long d'une trajectoire prédéterminée lors du rabattement du dossier (R) sur la surface d'assise (F).

2. Ensemble formant siège selon la revendication 1, **caractérisé en ce que** l'axe de pivotement (S) est formé par un groupe structurel matériel (10, 20) de l'ensemble formant siège.

3. Ensemble formant siège selon la revendication 1 ou 2, **caractérisé en ce que** l'axe de pivotement (S) est formé par un axe de montage (10) via lequel le dossier (R) est monté sur un groupe structurel formant châssis (2).

4. Ensemble formant siège selon l'une des revendications précédentes,
**caractérisé en ce que** l'axe de pivotement (S) est guidé à force le long de la trajectoire prédéterminée lors du rabattement du dossier (R).

5. Ensemble formant siège selon la revendication 4, **caractérisé en ce que** l'axe de pivotement (S) est guidé à force au moyen d'un système de guidage (20) qui s'étend le long de la trajectoire prédéterminée.

6. Ensemble formant siège selon la revendication 5, **caractérisé en ce que** le système de guidage (20) est formé par un coulisseau de guidage.

7. Ensemble formant siège selon la revendication 4, **caractérisé en ce que** l'axe de pivotement (S) est guidé à force au moyen d'un élément de guidage (27) via lequel l'axe de pivotement (S) est relié à un groupe structurel du châssis (2) et qui est déplacé lors du rabattement du dossier (R).

8. Ensemble formant siège selon la revendication 7, **caractérisé en ce que** l'élément de guidage (27) est réalisé sous forme allongée.

9. Ensemble formant siège selon la revendication 7 ou 8, **caractérisé en ce que** l'élément de guidage (27) est formé par un levier de guidage.

10. Ensemble formant siège selon l'une des revendications précédentes, **caractérisé en ce que** le dossier (R) est additionnellement relié de façon articulée à un groupe structurel du châssis (2) à l'extérieur de l'axe de pivotement (S).

11. Ensemble formant siège selon la revendication 10, **caractérisé en ce que** le dossier (R) est relié au groupe structurel de châssis (2) à l'extérieur de l'axe de pivotement (S) via un élément de couplage (23) qui s'étend depuis le dossier (R) vers le groupe structurel de châssis (2) et qui est déplacé lors du rabattement du dossier (R).

12. Ensemble formant siège selon la revendication 11, **caractérisé en ce que** l'élément de couplage (23) est formé par un levier de couplage.

13. Ensemble formant siège selon la revendication 10, **caractérisé en ce que** le dossier (R) est relié au groupe structurel de châssis (2) à l'extérieur de l'axe de pivotement (S) via un système de guidage (25) qui guide un tronçon (16) du dossier (R) lors du rabattement.

14. Ensemble formant siège selon la revendication 13, **caractérisé en ce que** le système de guidage (25) est formé par un coulisseau de guidage.

15. Ensemble formant siège selon l'une des revendications 10 à 14, **caractérisé en ce que** le mouvement de l'axe de pivotement (S) le long de la trajectoire prédéterminée lors du rabattement du dossier (R) est commandé par la coopération du dossier (R) avec le groupe structurel de châssis (2) à l'extérieur de l'axe de pivotement (S).

16. Ensemble formant siège selon l'une des revendications 10 à 15, **caractérisé en ce que** l'axe de pivotement (S) est guidé à force le long de la trajectoire prédéterminée au moyen d'un système de guidage (20) qui s'étend le long de cette trajectoire ou au moyen d'un élément de guidage (27), via lequel l'axe de pivotement (S) est relié au groupe structurel de châssis (2), et **en ce que** le mouvement de l'axe de pivotement (S) le long de la trajectoire prédéterminée est commandé au moyen d'un élément de couplage (23) ou au moyen d'un système de guidage (25), au moyen duquel le dossier (R) est relié au groupe structurel de châssis (2) à l'extérieur de l'axe de pivotement (S).

17. Ensemble formant siège selon l'une des revendications précédentes, **caractérisé en ce que** l'axe de pivotement (S) est déplacé sur une trajectoire fermée lors du rabattement du dossier (R).

18. Ensemble formant siège selon la revendication 17, **caractérisé en ce que** l'axe de pivotement (S) est déplacé, lors du rabattement du dossier (R), depuis une extrémité (20a) jusqu'à une autre extrémité (20b) d'une courbe-trajectoire ouverte, et en retour à ladite extrémité (20a) de la courbe-trajectoire.

19. Ensemble formant siège selon l'une des revendications précédentes, **caractérisé en ce que** l'axe de pivotement (S) est déplacé, lors du rabattement du dossier (R), au moins pendant une partie du mouvement de rabattement le long d'une direction qui est sensiblement opposée à la direction du mouvement de rabattement.

20. Ensemble formant siège selon l'une des revendications précédentes, **caractérisé par** des moyens (21, 21a) pour verrouiller l'axe de pivotement (S) dans une position qui correspond à un dossier (R) redressé en position d'utilisation, et/ou dans une position qui correspond à un dossier (R) rabattu sur la surface d'assise (F).

21. Ensemble formant siège selon la revendication 20, **caractérisé en ce que** les moyens (21, 21a) pour verrouiller l'axe de pivotement (S) comprennent un levier de verrouillage (21).

22. Ensemble formant siège selon l'une des revendications précédentes, **caractérisé en ce qu'**il est prévu un système de réglage (4) au moyen duquel l'inclinaison du dossier redressé (R) est réglable entre diverses positions d'utilisation.

23. Ensemble formant siège selon la revendication 22, **caractérisé par** un dispositif de verrouillage (5) pour verrouiller une inclinaison préalablement réglée du dossier (R).

24. Ensemble formant siège selon la revendication 23, **caractérisé en ce que** le dispositif de verrouillage est formé soit par une conception autobloquante du système de réglage (4) soit par un frein associé au système de réglage (4).

25. Ensemble formant siège selon la revendication 23, **caractérisé en ce qu'**il est prévu un dispositif de verrouillage (5) particulier qui coopère avec le système de réglage (4).

26. Ensemble formant siège selon la revendication 25, **caractérisé en ce que** le dispositif de verrouillage (5) comprend un élément de verrouillage primaire (51) qui agit sur le système de réglage (4) pour le verrouillage de celui-ci, ainsi qu'un élément de verrouillage secondaire (52) au moyen duquel l'élément de verrouillage primaire (51) peut être verrouillé dans une position dans laquelle il agit sur le système de réglage (4).

27. Ensemble formant siège selon la revendication 26, **caractérisé en ce que** l'élément de verrouillage secondaire (52) amène l'élément de verrouillage primaire (51) hors de son engagement avec le système de réglage (4) pour pouvoir modifier l'inclinaison du dossier.

28. Ensemble formant siège selon l'une des revendications précédentes, **caractérisé par** :
- un dossier (R) réglable dans son inclinaison est monté en pivotement, qui présente une face avant (VO) servant à soutenir le dos d'un utilisateur du siège, et
- un agencement à ressort (D, DF) avec au moins un élément élastique au moyen duquel le dossier (R) est précontraint de façon élastique de manière qu'il présente la tendance à pivoter vers l'avant et à s'appliquer par sa face avant (VO) contre le dos de l'utilisateur du siège,
dans lequel l'inclinaison du dossier (R) est réglable par application d'une force sur sa face avant (VO) à l'encontre de l'action de l'agencement à ressort (D, DF), et l'agencement à ressort (D, DF) attaque un élément de transmission (104) qui est couplé au dossier (R) et auquel est associé un dispositif de verrouillage (105) au moyen duquel l'élément de transmission (104) est verrouillable dans différentes positions.

29. Ensemble formant siège selon la revendication 28, **caractérisé en ce que** le dossier, dans l'état verrouillé du dispositif de verrouillage (105), est arrêté dans sa position d'inclinaison respective.

30. Ensemble formant siège selon la revendication 28 ou 29, **caractérisé en ce que** l'inclinaison du dossier (R) est réglable dans l'état déverrouillé du dispositif de verrouillage (105).

31. Ensemble formant siège selon la revendication 30, **caractérisé en ce que** le dossier (R) peut être pivoté vers l'avant sous l'action de l'agencement à ressort (D, DF) sur l'élément de transmission (104).

32. Ensemble formant siège selon la revendication 30 ou 31, **caractérisé en ce que** le dossier (R) peut être pivoté vers l'arrière sous l'action d'une force de poussée sur sa face avant (VO) à l'encontre de l'action de l'agencement à ressort (D, DF).

33. Ensemble formant siège selon l'une des revendications 28 à 32,
**caractérisé en ce que** l'élément de transmission (104) est un composant d'un agencement de transmission (102, 104), en particulier d'un agencement à levier, au moyen duquel l'agencement à ressort (D, DF) est couplé au dossier (R).

34. Ensemble formant siège selon la revendication 33, **caractérisé en ce que** l'agencement de transmission (102, 104) sert à la démultiplication d'un couple de rotation exercée par l'agencement à ressort (D, DF) sur l'élément de transmission (104).

35. Ensemble formant siège selon l'une des revendications 28 à 34,
**caractérisé en ce qu'**un accouplement (120, 121) est associé à l'élément de transmission (104), au moyen duquel le dossier (R) peut être découplé vis-à-vis de l'élément de transmission (104) de telle manière que le dossier (R) peut être rabattu en direction de la surface d'assise (FL) du siège de véhicule sans que l'élément de transmission (104) soit déplacé.

36. Ensemble formant siège selon la revendication 35, **caractérisé en ce que** le dossier (R), lors du découplage vis-à-vis de l'élément de transmission (104), est découplé par l'agencement à ressort (D, DF) de sorte que celui-ci n'agit pas sur le dossier (R).

37. Ensemble formant siège selon l'une des revendications 28 à 36,
**caractérisé en ce qu'**un accouplement (120, 121) est associé à l'élément de transmission (104), au moyen duquel le dossier (R) peut être découplé vis-à-vis de l'élément de transmission (104) de manière que le dossier (R) peut être rabattu sur la surface d'assise quand l'élément de transmission (104) est verrouillé au moyen d'un dispositif de verrouillage (105).

38. Ensemble formant siège selon l'une des revendications 28 à 37,
**caractérisé en ce que** l'axe de pivotement du dossier (R) pour le découplage du dossier (R) vis-à-vis de l'élément de transmission (104) lors du rabattement du dossier (R) est déplacé le long d'une trajectoire prédéterminée (120) qui est de préférence réalisé de manière à empêcher, grâce au mouvement de l'axe de pivotement le long de la trajectoire (120), une rétroaction du mouvement de pivotement du dossier (R) sur l'élément de transmission (104).

39. Ensemble formant siège selon la revendication 38, **caractérisé en ce que** la trajectoire (120) est formée par un système de guidage dans lequel l'axe de pivotement est guidé en se déplaçant vers la gauche.

40. Ensemble formant siège selon l'une des revendications 35 à 37, **caractérisé en ce que** l'élément de transmission (104) peut être amené hors de son engagement avec le dossier (R), de sorte que l'élément de transmission (104) n'est pas en liaison avec le dossier (R).

41. Ensemble formant siège selon l'une des revendications 39 à 40, **caractérisé en ce qu'**il est prévu des moyens de blocage (103) au moyen desquels l'accouplement (120, 121) peut être verrouillé dans une situation dans laquelle l'élément de transmission (104) est accouplé avec le dossier (R).

42. Ensemble formant siège selon l'une des revendications 39 à 41, **caractérisé en ce qu'**il est prévu des moyens de blocage (103) au moyen desquels l'accouplement (120, 121) peut être verrouillé dans une situation dans laquelle l'élément de transmission (104) est découplé vis-à-vis du dossier (R).

43. Ensemble formant siège selon l'une des revendications 38 ou 39 et des revendications 41 ou 42, **caractérisé en ce que** les moyens de blocage (103) attaquent l'axe de pivotement du dossier (R) et empêchent son déplacement le long de la trajectoire (120).

44. Ensemble formant siège selon la revendication 43, **caractérisé en ce que** les moyens de blocage (103) sont formés par un levier.

45. Ensemble formant siège selon l'une des revendications 28 à 44, **caractérisé en ce que** le dispositif de verrouillage (105) de l'élément de transmission (104) comprend un élément de verrouillage primaire (151) et un élément de verrouillage secondaire (152), l'élément de verrouillage primaire (151) attaquant l'élément de transmission (104) dans l'état verrouillé, et l'élément de verrouillage secondaire (152) bloquant l'élément de verrouillage primaire (151) dans l'état verrouillé.

46. Ensemble formant siège selon l'une des revendications 28 à 45, **caractérisé en ce que** l'élément de transmission (104) est formé par un levier à secteur denté (141).

47. Ensemble formant siège selon l'une des revendications 28 à 46, **caractérisé en ce que** l'agencement à ressort (D, DF) comprend un élément de ressort qui attaque l'élément de transmission (104).

48. Ensemble formant siège selon l'une des revendications 28 à 47, **caractérisé en ce que** l'élément de transmission (104) peut être amené en engagement avec le dispositif de verrouillage (105) via une denture (142).
